(19) Europäisches Patentamt
European Patent Office
Office européen des brevets

(11) Publication number: **0 395 030 A1**

(12) **EUROPEAN PATENT APPLICATION**

(21) Application number: **90107887.3**

(51) Int. Cl.[5]: **C08K 5/527, C08L 23/02**

(22) Date of filing: **25.04.90**

(30) Priority: **26.04.89 JP 107018/89**

(43) Date of publication of application:
**31.10.90 Bulletin 90/44**

(84) Designated Contracting States:
**BE CH DE FR GB LI NL**

(71) Applicant: **ADEKA ARGUS CHEMICAL CO., Ltd.**
**5-2-13 Shirahata, Urawa City**
**Saitama Prefecture(JP)**

(72) Inventor: **Haruna, Tohru**
**969-4 Shimohideya**
**Okegawa City, Saitama Prefecture(JP)**
Inventor: **Nishikawa, Kazunori**
**1-256 Shinmatsudominami**
**Matsudo City, Chiba Prefecture(JP)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Polyolefin resins containing ziegler type complex catalyst residues stabilized with organic phosphites.**

(57) Polyolefin resin compositions having improved resistance to deterioration comprising a crystalline polyolefin resin containing residues of a Ziegler type complex catalyst supported on a halogen containing magnesium compound and an organic phosphite having the formula:

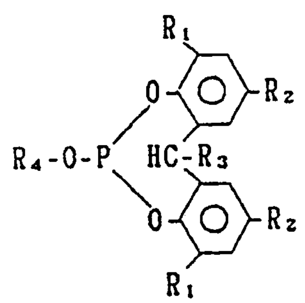

I

wherein $R_1$ is tertiary-butyl or tertiary-amyl, $R_2$ is alkyl having from one to about nine carbon atoms, $R_3$ is hydrogen or alkyl having from one to about four carbon atoms, and $R_4$ is selected from the group consisting of alkyl having from one to about thirty carbon atoms, and benzene groups having the formula:

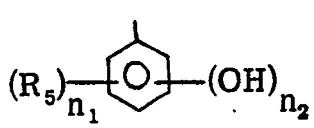

II

where $R_5$ is alkyl having from one to about four carbon atoms, and $n_1$ and $n_2$ are numbers from 0 to 2.

EP 0 395 030 A1

# POLYOLEFIN RESINS CONTAINING ZIEGLER TYPE COMPLEX CATALYST RESIDUES STABILIZED WITH ORGANIC PHOSPHITES

Ziegler type complex catalysts supported on a halogen-containing magnesium compound can give yields of polymer (per given amount of a transition metal (such as titanium) which is the main component of the catalyst) that range from several hundred times to thousands of times as much as the yield obtained when an unsupported catalyst is used (such as a catalyst system comprising diethylaluminium monochloride and an activated titanium trichloride-aluminum chloride mixture which has been prepared by reducing titanium tetrachloride with metallic aluminum and milling the reaction product). Such catalysts give catalyst residues which do not need to be removed from the resulting polyolefin resins. Typical examples of such novel catalysts are disclosed in Japan Kokai No. 9342/72 and Japan Kokai No. 126950/75.

While such supported catalysts provide higher polymer yields per amount of transition metal which is the main component of the catalyst, the concentration of transition metal supported on the carrier is low. The amount of a transition metal component supported on the carrier is less than from 1% to 10%, at the most, by weight of the solid catalyst component. The yield of polymer per carrier (magnesium compound) is from several thousands to tens of thousands at the most.

There can arise adverse effects on the polyolefin resins from the carrier remaining with the catalyst residues. Thus, the thermal stability, odor, color, anticorrosivity, weathering properties and other properties of the molded polymer products may be impaired by the magnesium compounds (usually magnesium halides) contained in polymers containing such catalyst residues. The problem of low weatherability is particularly serious, since large quantities of these molded polyolefin resin products are used outdoors.

To overcome the destabilizing effect of these catalyst residues, Fujii and Onishi, Japan Kokai No. 73842/79, U.S. Patent No. 4,261,880, patented April 14, 1981 proposed the use of organic phosphites. Japan Kokai No. 200433/82 discloses the use of hydrotalcites. The compositions may contain auxiliary components normally used in polyolefin resins; antioxidants and/or ultraviolet absorbers are especially useful.

In accordance with the Fujii et al invention, there is provided a polyolefin resin composition improved in weathering properties comprising the following two components (1) and (2) in an intimate admixture:

(1) a crystalline polyolefin resin which has been produced in the presence of a Ziegler type complex catalyst supported on a halogen-containing magnesium compound and has not yet been subjected to a catalyst residue-removal step; and

(2) an organic phosphorus compound in a quantity of from 0.1 to 1,000 times the weight of the halogen-containing magnesium compound contained in the crystalline polyolefin resin, the organic phosphorus compound being selected from the group consisting of:

(i) a compound of the formula $(R_1O)_3P$, wherein $R_1$ is hydrogen, an alkyl group having from 1 to 20 carbon atoms, an aryl or alkaryl group having from 6 to 20 carbon atoms, an aralkyl group having from 7 to 30 carbon atoms, or hydroxy or halo-, alkylthio-substituted derivatives thereof wherein the alkyl moiety has 1 to 30 carbon atoms, and the three $R_1$ groups may be the same or different;

(ii) a compound of the formula, $(R_2O)_2P\text{-}O\text{-}L\text{-}O\text{-}P(OR_2)_2$, wherein $R_2$ has the same definition as the above-mentioned $R_1$, the four $R_2$s being the same or different, and L is a divalent hydrocarbon residue having from 2 to 30 carbon atoms with or without an ether linkage contained therein;

(iii) a compound of the formula

$$\begin{array}{l}(R_3O)_2P\text{-}O\text{-}\underset{|}{X}\text{-}O\text{-}P(OR_3)_2 \\ \qquad\qquad\quad O\text{-}P(OR_3)_2\end{array}$$

wherein $R_3$ has the same definition as the above-mentioned $R_1$, the six $R_3$s being the same or different, and X is a trivalent hydrocarbon residue having from 3 to 40 carbon atoms with or without an ether linkage contained therein;

(iv) a compound of the formula

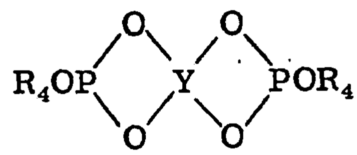

wherein $R_4$ has the same definition as the above-mentioned $R_1$, the two $R_4$s being the same or different, and Y is a tetravalent hydrocarbon residue having from 5 to 20 carbon atoms with or without an ether linkage contained therein;

(v) a compound of the formula $(R_5S)_3P$, wherein $R_5$ has the same definition as the above-mentioned $R_1$, the three $R_5$s being the same or different; and

(vi) mixtures thereof.

The effect is based on the specific behavior of the organic phosphorus compounds toward the halogen-containing magnesium compound which has been used as the carrier for the transition metal component of Ziegler type complex catalyst and remains in the resulting polyolefin resin.

Organic phosphites have been widely used as stabilizers for polyolefins, although not specifically for polyolefins containing catalyst residues, and similar polymeric materials, particularly polyvinyl chloride. Many different types of phosphites, some of rather complex structure, have been proposed. Patents Nos. 3,255,136 and 3,655,832 have suggested organic phosphite-phenol transesterification products, the preferred phenol being a bis-phenol. Other types of tris-(alkaryl) phosphite esters have been disclosed in U.S. patents Nos. 2,220,113; 2,220,845; 2,246,059; 2,419,354; 2,612,488; 2,732,365; 2,733,226; and 2,877,259. Additional tris-(alkaryl) phosphites are disclosed in U.S. patents No. 3,167,526 to Nicholson, patented January 26, 1965; No. 3,061,583 to Huhn and Sheets, patented October 30, 1962; No. 3,829,396 to Oakes and Cross, patented August 13, 1974; French patents Nos. 1,496,563 to U.S. Rubber Company, délivré August 21, 1967, and 1,497,390 to Ethyl Corporation, délivré August 28, 1967; and British patents Nos. 1,058,977, published February 15, 1967, to Hooker Chemical Corporation and 1,143,375, published February 19, 1969, to Uniroyal Inc.

Oakes et al disclose bis-(2,4-di-tertiary-butyl-phenyl) cyclohexyl phosphite and 2,4-di-(tertiary butyl) phenyl dicyclohexyl phosphite, which are liquids.

French patent No. 1,496,563 described phosphites derived from 2,6-di-tertiary-butyl-hydroquinone and 2,5-di-tertiary-butyl- hydroquinone, and it is suggested that they can be used with thiodipropionic acid esters of olefin polymers.

British patent No. 1,143,375 has a similar disclosure; tris-(2,5-di-tertiary-butyl-4-hydroxy-phenyl) phosphite is disclosed.

British patent No. 1,058,977 discloses 2,4,6-tri-substituted aryl phosphites, the substituents including tertiary-butyl groups.

French patent No. 1,497,390 discloses tris-(3,5-di-alkyl-4-hydroxy-phenyl) phosphites, as well as tris-(3-isopropyl-5-tertiary-butyl-phenyl) phospite.

Kuriyama et al U.S. patent No. 3,588,554 patented January 26, 1971, provides olefin polymer compositions containing as a stabilizer an organophosphite having the general formula:

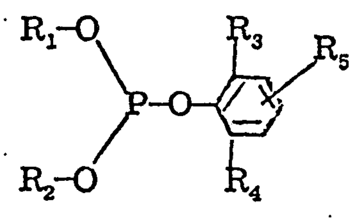

wherein

$R_1$ and $R_2$ each represent a member selected from the group consisting of substituted and unsubstituted alkyl, cycloalkyl, aryl, alkaryl, aralkyl, and aliphatic thio ether groups and $R_3$, $R_4$ and $R_5$ each represents a member selected from the group consisting of hydrogen and alkyl, cycloalkyl, aryl, alkaryl, and aralkyl groups, at least one of said $R_3$ and $R_4$ being a tertiary butyl group.

Suitable organo phosphites include, for example, di-n-butyl(2-t-butyl-cresyl) phosphite,di-n-hexyl(2-t-butyl-m-cresyl)phosphite, di-n-hexyl(2-t-butyl-p-cresyl) phosphite, di-n-octyl(2-t-butyl-p- cresyl)phosphite, di-n-butyl-3,4-di-t-butyl-phenyl) phosphite, di-n-butyl-(2,6-di-t-butyl-p-cresyl) phosphite, di-phenyl (2-t-butyl-p-cresyl) phosphite, tri-(2-t-butyl-p-cresyl) phospite, di(ethylthioethyl)-(2-t-butyl-p-cresyl) phosphite, di-(octylthioethyl)(2-t-butyl-p-cresyl) phosphite, and tri (2,4-di-t-butyl-phenyl) phosphite.

Many organic phosphites have been proposed as stabilizers for polyvinyl chloride resins, and are employed either alone or in conjunction with other stabilizing compounds, such as polyvalent metal salts of fatty acids and alkyl phenols. Such phosphite stabilizers normally contain alkyl or aryl radicals in sufficient number to satisfy the three valences of the phosphite, and typical phosphites are described in the patent literature, for example, W. Leistner et al., U.S. patents Nos. 2,564,646 of August 14, 1951, 2,716,092 of August 23, 1955, and 2,997,454 of August 2, 1961.

Organic phosphites have also been added as stabilizers in amounts of 0.01 to 1%, preferably 0.05% to 0.2% by weight, to high molecular weight polycarbonate plastics, for example the polycarbonate of 2,2′-bis-(4-hydroxyphenyl) propane of molecular weight 10000 and up to over 50000 as disclosed by G. Fritz in U.S. patent No. 3,305,520 of February 21, 1967.

A. Hecker in U.S. patent No. 2,860,115 of November 11, 1958 discloses compositions of organic phosphites with metal salts of carboxylic acids used in olefin polymers.

Phosphites are also employed in conjunction with other stabilizers such as a polyhydric phenol in the stabilization of polypropylene and other synthetic resins against degradation upon heating or ageing under atmospheric conditions. The polyhydric phenol is thought to function as an antioxidant in such combinations. Disclosures by R. Werkheiser, U.S. patents Nos. 2,726,226 of December 6, 1975;I. Salyer et al, 2,985,617 of May 23, 1961; L Friedman, 3,039,993 of June 19, 1962; W. Nudenberg, 3,080,338 of March 5, 1963; C. Fuchsman, 3,082,187 of March 19, 1963; H.Orloff et al, 3,155465 of December 24, 1963; A. Nicholson, 3,167,526 of January 26, 1965; A. Hecker et al, 3,149,093 of September 15, 1964, 3,244,650 of April 5, 1966 and 3,225,136 and 3,255,151 of June 7, 1986; C. Bawn, 3,352,820 of November 14, 1967; D. Miller, 3,535,277 of October 20, 1970; J. Casey, 3,586,657 of June 22, 1971; C. Abramoff 3,856,728 of December 24, 1974; M. Minagawa, 3,869,423 of March 4, 1975 and 3,907,517 of September 23, 1975; and British patents Nos. 846,684, 851,670, and 8,66,883 are representative of stabilizer combinations including organic phosphites, polydydric phenols,and other active ingredients.

The importance of organic phosphites as stabilizers for synthetic resins has led to the development of a large variety of special phosphites intended to provide improved stabilizing effectiveness and compatability and ease of compounding with the resin and with other stabilizers commonly used. However, the phosphites which have been proposed have not been entirely successful, partly because of their complicated structure, which makes them costly to prepare, and partly because of their difficulty of preparation.

Among these special phosphites, L. Friedman, U.S. patent No. 3,047,608 of July 31, 1962 discloses a class of biphosphites having the formula:

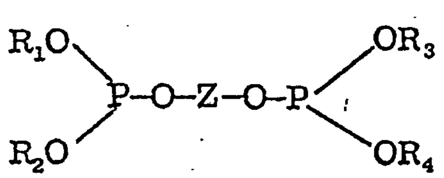

and

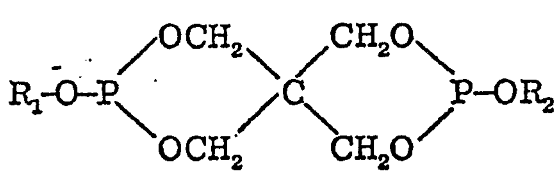

in which

$R_1$, $R_2$, $R_3$ and $R_4$ are alkyl or aryl and Z is $-CH_2CH_2SCH_2CH_2O-$, $-C_2CH_2SO_2C_2CH_2-(-CH_2CH_2O-)_x$ or $(CHCH_3CH_2)_x$ where x is at least two, and in U.S. patent No. 3,053,878 of September 11, 1962 a class of linear phosphite polymers having the formula:

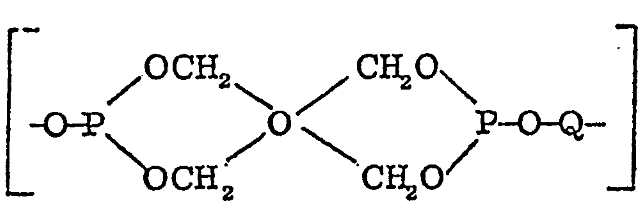

in which

Q is the alkylene or arylene portion of a dihydric alcohol or dihydric phenol.

R. Morris et al in U.S. patent No. 3,112,286 of November 26, 1963 discloses phosphites having the formula:

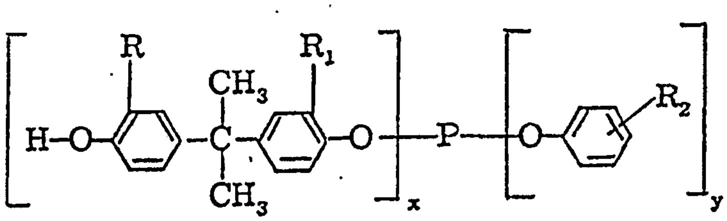

in which

R represents a bulky hydrocarbon group such as t-butyl, t-amyl, t-hexyl, cyclohexyl, t-pentyl, t-octyl, phenyl and the like;

$R_1$ represents hydrogen and R;

$R_3$ represents an alkyl group from six to twenty carbon atoms which is preferably in the meta or para position;

x represents a number of from 1 to 3 inclusive;

y represents a number of from 0 to 2 inclusive and the sum of the numerical value of x + y is always exactly 3.

D. Brown, U.S. patent No. 3,297,631 of January 10, 1967 discloses condensation products of phosphorus compounds with bisphenols and trisphenols which may be represented by the structures:

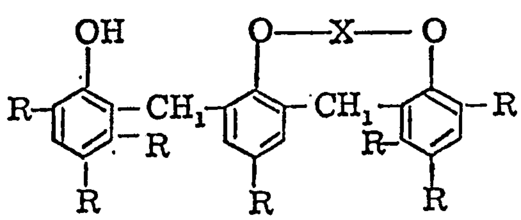 ; 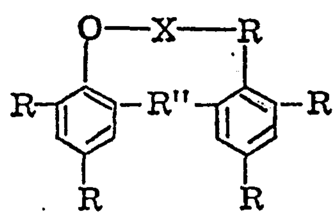 ;

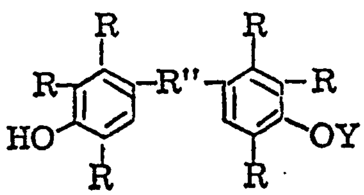

where:

X is selected from the following: > P-OR′; > P-R′;

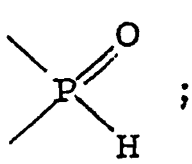 ; 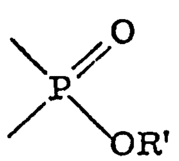 ; 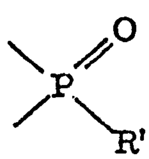

and Y is selected from the following: -P(OR′)$_2$;

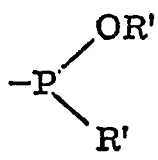 ; 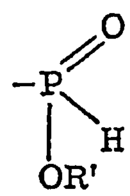 : $-PR_2'$ ; $-P(OH)_2$;

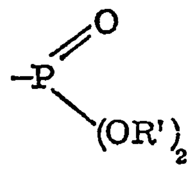 ; 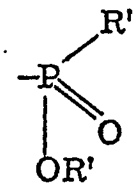 ; 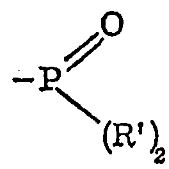

R is hydrogen, alkyl of one to sixteen carbon atoms or aryl or a combination of these; R′ is alkyl of one to sixteen carbon atoms or aryl, and R″ is alkylidene of one to sixteen carbon atoms or an aryl-substituted alkylidene.

C. Baranauckas, U.S. patent No. 3,305,608 of February 21, 1967, discloses phenolic phosphites useful as polymer stabilizers prepared by reacting a triorganophosphite, a polyol, and an aromatic material having two to six phenolic hydroxyl groups at 60° to 180° C in specified proportions.

C. Brindell, U.S. patent No. 3,412,064 of November 19, 1968 discloses phenolic phosphites represented by the general formula:

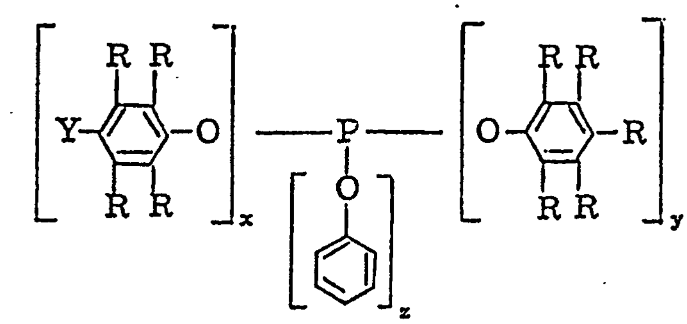

where

x is from 1 to 3, y and z each from 0 to 2, x + y + z = 3, R is hydrogen or alkyl and Y is hydroxyl or a group of the formula:

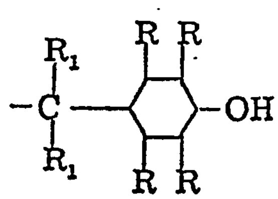

where R is hydrogen or alkyl.

M. Larrison, U.S. patent No. 3,419,524 of December 31, 1968, discloses phosphites useful as polymer stabilizers having the formula:

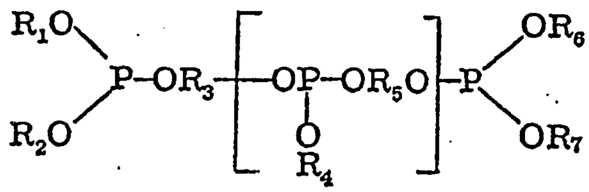

where $R_1$, $R_2$, $R_4$, $R_6$ and $R_7$ are aryl or haloaryl, and $R_3$ and $R_5$ are a polyalkylidene glycol or an alkylidene bisphenol or a hydrogenated alkylidene bisphenol or a ring-halogenated alkylidene bisphenol from which the two terminal hydrogens have been removed.

O. Kauder et al, U.S. patents No.3,476,699 of November 4, 1969 and No. 3,655,832 of April 11, 1972 discloses organic phosphites containing a free phenolic hydroxyl group and defined by the formula:

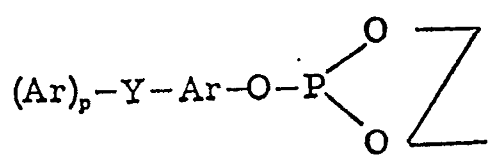

wherein Z is selected from the group consisting of hydrogen and aliphatic, cycloaliphatic, aromatic, heterocyclic and $(Ar)_p$-Y-Ar groups, taken in sufficient number to satisfy the valences of the two phosphite oxygen atoms; Y is a polyvalent linking group selected from the group consisting of oxygen; aliphatic, cycloaliphatic and aromatic hydrocarbon groups attached to each Ar group through a carbon atom not a member of an aromatic ring; oxyaliphatic; thioaliphatic, oxycycloaliphatic, thiocycloaliphatic; heterocyclic, oxyheterocyclic, thioheterocyclic, carbonyl, sulfinyl; and sulfonyl groups; Ar is a phenolic nucleus which can be phenyl or a polycarbocyclic group having condensed or separate phenyl rings; each Ar group is either connected through an oxygen atom to a phosphite group or contains a free phenolic hydroxyl group,or both; and p is a number, one or greater, and preferably from one to four, which defines the number of Ar groups linked to Y.

L. Friedman, U.S. patent No. 3,516,963 of June 23, 1970 discloses phosphites having the formula:

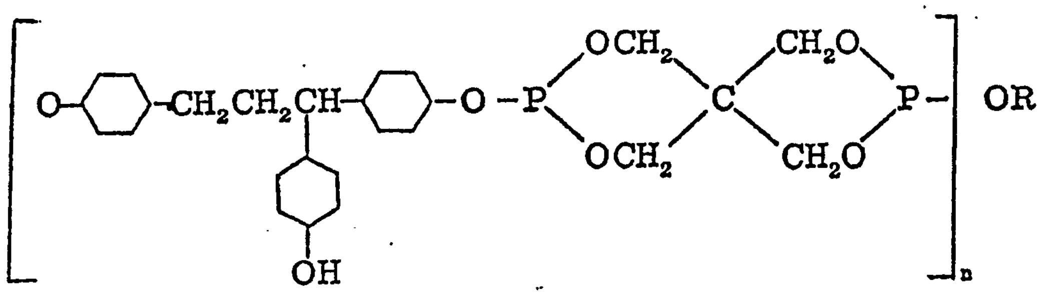

where R is alkyl, alkenyl, aryl, aralkyl, haloaryl, haloalkyl or

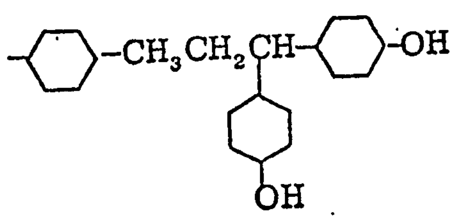

and n is an integer of at least 1. n can be 2,3,4,5,6,7,8,10,50,100 or even more.

D. Brown et al in U.S. patents Nos. 3,510,507 of May 5, 1970 and 3,691,132 of September 12, 1972 discloses polyolefins stabilized with polyphosphites, polyphosphates, polyphosphonites, polyphosphonates, polyborates, polycarbonates, and polysilanes which are condensation products of a 4,4′-bisphenol with a

condensing or linking agent which may be of the ester type, such as the esters of triaryl or mixed aryl-alkyl compounds, or the acid halide type. Brown's condensation product stabilizers have molecular weights between 600 and 8000 or higher and are described by the structural formula:

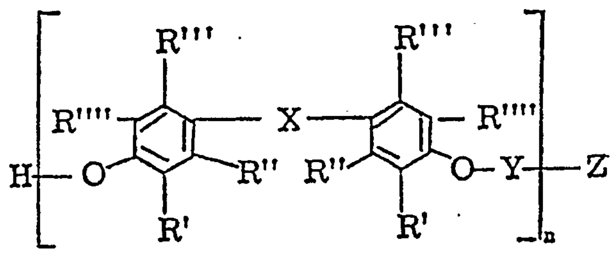

where X is selected from the group consisting of

$-S-$, 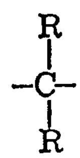 , 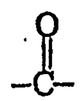 ,

-C-C, and C-A-C where A is a $C_1$ to $C_{16}$ alkylene or an arylene; $R'$, $R''$, $R'''$, and $R''''$ are selected from the group consisting of hydrogen, $C_1$ to $C_{18}$ alkyls, and an aryl group; Y is selected from the group of

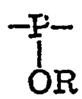 , 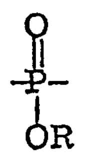 , 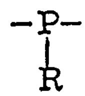 , 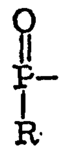 , and 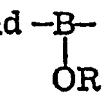

where R is hydrogen, a $C_1$ to $C_{18}$ alkyl or aryl;

$-\overset{\overset{O}{\|}}{C}-$, $-\overset{\overset{O}{\|}}{C}-(CH_2)_m-\overset{\overset{O}{\|}}{C}-$

where m is 0 to 10, preferably 4 to 8;

$-\overset{\overset{O}{\|}}{C}-A'-\overset{\overset{O}{\|}}{C}-$

where $A'$ is $(CH_2)_n-S-(CH_2)_n$ or $-(CH_2)_n-S-(CH_2)_m-S-(CH_2)_n$ where n is 0 to 10, preferably 2 and m is 0 to 10, preferably 5;

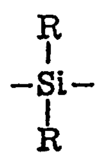 and 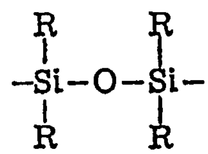

where R is an alkyl, preferably methyl, and Z is

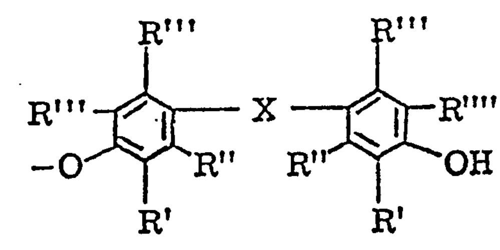

where R′, R″, R‴, R″″, and X correspond respectively to the R′, R″, R‴, R″″, and X previously selected when n has a value from 1 to 15, or may be derived from the compound used to introduce Y into the product when n has a value from 2 to 15, for example, -R or -OR where R is hydrogen, an alkyl, or aryl. When Y in the formula of Bown's stabilizer is

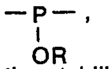

the stabilizer is a type of hydroxyaryl phosphite. Similarly, when Y in the formula is

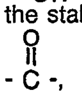

the stabilizer is a hydroxyaryl carbonate.

Bown's condensation products are described as especially effective in high molecular weight solid polyolefins when used together with a dialkyl sulfide costabilizer such as dilauryl thiodipropionate, distearyl thiodipropionate, ditridecyl thiodipropionate, dicetyl sulfide, bis(tetradecylmercapto) paraxylylene, and 10, 24-dithiotetracontane.

J. Floyd et al in German published application No. 2505071 of August 14, 1975 abstracted in Chemical Abstracts 1976, Volume 84, abstract No. 5945f, disclosed low molecular weight polycarbonate esters of bisphenols such as 2,2-bis(3-t-butyl-4-hydroxyphenylpropane) and 4,4′-butylidene bis(6-t-butyl-3-methylphenol) prepared in such a way as to contain few or no free phenolic hydroxyl groups as being highly effective heat and light stabilizers for polyolefins and giving a synergistic effect with distearyl thiodipropionate, tris (nonylphenyl) phosphite, and distearyl pentaerythritol diphosphite.

U.S. patent No. 4,252,750 to Buysch et al, patented February 24, 1981, provides phosphorous acid esters corresponding to the general formula

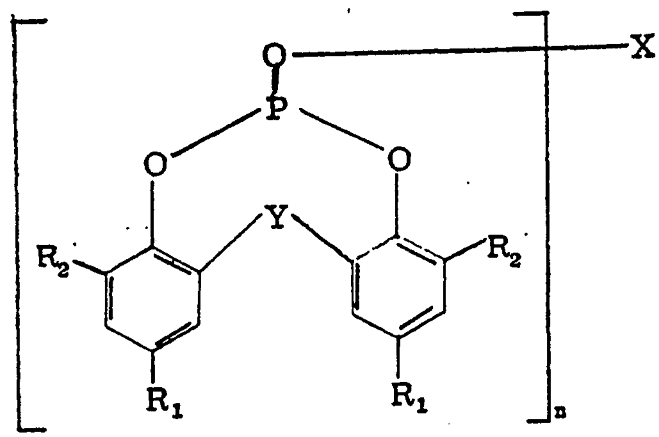

wherein

$R_2$ is a benzyl, $\alpha$-methylbenzyl, $\alpha,\alpha$-dimethylbenzyl, cyclopentyl or cyclohexyl radical;

$R_1$ is a $C_1$-$C_9$ alkyl, a $C_5$-$C_6$ cycloalkyl, a $C_7$-$C_9$ aralkyl or a $C_6$-$C_{10}$ aryl radical;

Y is a sulphur atom or a group HC-$R_3$, in which $R_3$ is a hydrogen atom a $C_1$-$C_6$ alkyl, a cyclohexyl or cyclohexenyl radical;

X is a hydrogen atom, an optionally substituted single-bond to four-bond straight-chain or branched-chain $C_1$-$C_{18}$ aliphatic radical, A $C_7$-$C_{18}$ aralkyl radical or a $C_6$-$C_{18}$ aromatic radical, each of which radicals may optionally contain olefinic double bonds and/or hetero atoms, preferably N, O and/or S atoms, and

n is an integer from 1 to 4, preferably from 1 to 2, provided that when X is a hydrogen atom the n is 1.

U.S. patent No. 4,288,391, to Spivack, patented September 8, 1981, provides alkylated 1,1′-biphenyl-2,2′-diyl phosphites represented by the formula

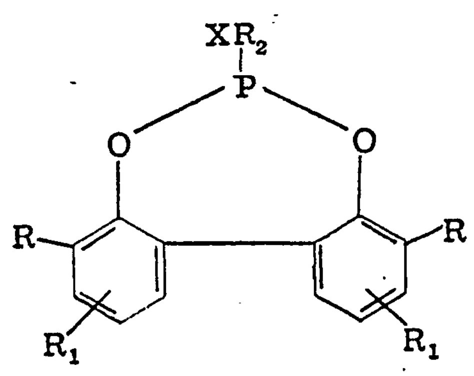

or

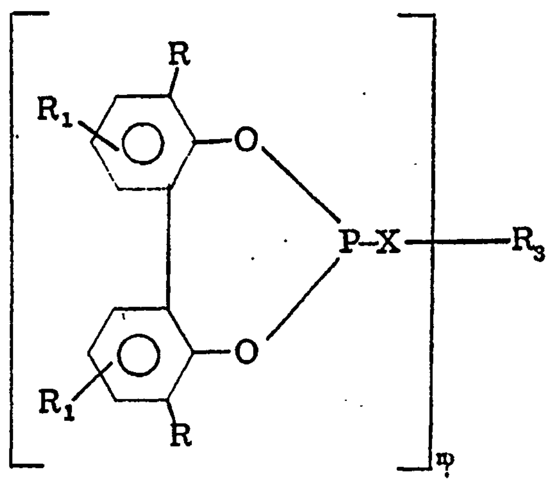

wherein
R is an alkyl group of 1 to 18 carbon atoms,
$R_1$ is hydrogen or an alkyl group of 1 to 18 carbon atoms, and
$R_2$ is an alkyl group of 1 to 20 carbon atoms, phenyl, phenyl substituted by 1 to 3 alkyl groups each having 1 to 8 carbon atoms or by two alkyl groups each having 1 to 8 carbon atoms and by $-COOR_4$ where $R_4$ is alkyl of 1 to 18 carbon atoms,
$R_3$ is an n-valent radical selected from the group consisting of a straight- or branched-chain alkylene of 2 to 12 carbon atoms, a straight- or branched-chain alkane-triyl, -tetrayl, -pentayl or -hexayl of 3 to 6 carbon atoms, alkenylene of 4 to 6 carbon atoms, cycloalkylene of 6 to 12 carbon atoms, 1,4-cyclohexanedimethylene, arylene or arenetriyl of 6 to 10 carbon atoms, p-xylylene, phenylene -E- phenylene where E is a direct bond, -O-, -S-, $-NR_5-$, where $R_5$ is alkyl of 1 to 18 carbon atoms; a straight- or branched-chain alkylene or alkylidene of 1 to 12 carbon atoms or cycloalkylidene of 5 to 6 carbon atoms, said arylene or said phenylene-E-phenylene substituted by 1 to 4 alkyl groups each having 1 to 8 carbon atoms, $-(CH_2)_xS-(CH_2)_x-$ where x is 2 to 6, dipentaerythrityl, and $-(CH_2\underset{Y}{C}HO)_z CH_2\underset{Y}{C}H-$
where Y is hydrogen, methyl or ethyl and z is 1 to 10,
X is oxygen or sulfur, and
n is 2 to 6.

U.S. patent No. 4,318,845 to Spivack et al, patented March 9, 1982, provides alkanolamine esters of 1,1′-biphenyl-2,2′-diyl-and alkylidene-1,1′-biphenyl-2,2′-diyl-cyclic phosphites corresponding to the formula:

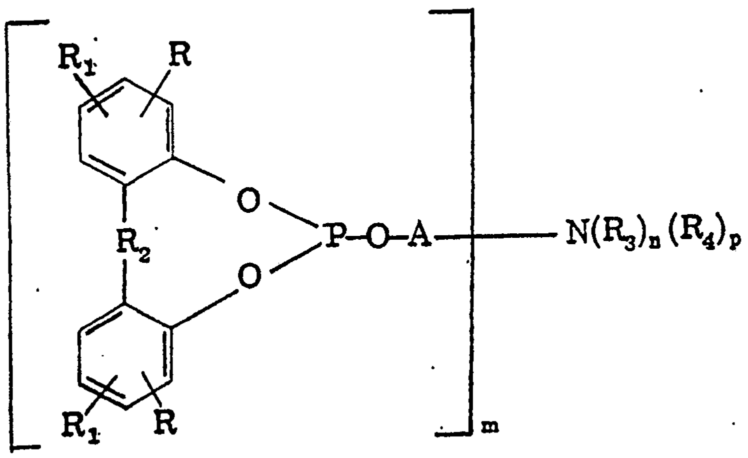

such that when m = 1, n = 1 and p = 1, m = 2, n = 1 and p = 0, m = 3, n and p are zero, and wherein
R is an alkyl group of 1 to 18 carbon atoms,
$R_1$ is hydrogen or an alkyl group of 1 to 18 carbon atoms;
$R_2$ is a direct bond or lower alkylene of 1 to 12 carbon atoms;
A is alkylene of 1 to 6 carbon atoms or cycloalkylene of 5 to 6 carbon atoms;
$R_3$ is an alkyl of 1 to 18 carbon atoms, or

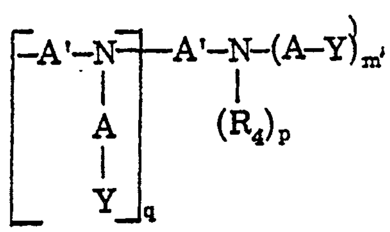

wherein Y is

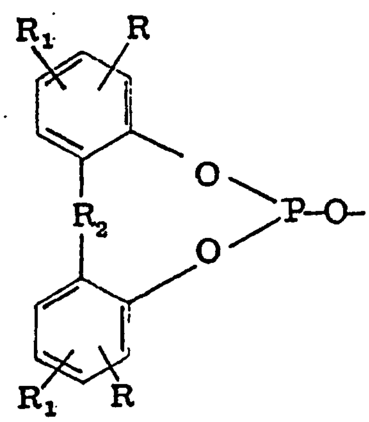

A′ is alkylene of 1 to 6 carbon atoms or cycloalkylene of 5 to 6 carbon atoms,
m′ is 1 or 2,
p is 0 or 1, and
q is 0-5
with A, R, $R_1$, $R_2$ being as previously defined; provided that when p and q are 0, -N-A′-N can be a diazacycloalkyl group of 2 to 10 carbon atoms or,
when m is 1 and p is 0, N-$R_3$ is an azacycloalkyl group of 2 to 10 carbon atoms or an azaoxacycloalkyl group of 3 to 7 carbon atoms; and
$R_4$ is alkyl of 1 to 18 carbon atoms.

U.S. patent No. 4,362,830 to Minagawa et al, patented December 7, 1982, provides hindered bis-phenol

phenyl phosphites having the structure:

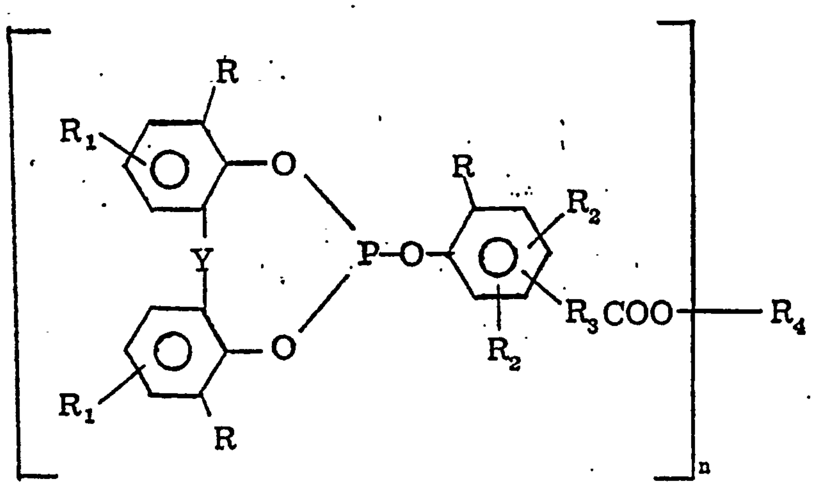

wherein:

R is selected from the group consisting of alkyl having from one up to about eighteen carbon atoms; cycloalkyl having from three up to about twelve carbon atoms; alkaryl and aryl having from six to about eighteen carbon atoms; preferably, a bulky group such as iso, secondary or tertiary alkyl having from three to about ten carbon atoms; or cycloalkyl having six to twelve carbon atoms;

$R_1$ and $R_2$ are each selected from the group consisting of hydrogen; alkyl having from one to about eighteen carbon atoms; cycloalkyl having from three up to about twelve carbon atoms; alkaryl and aryl having from six to about eighteen carbon atoms; and are preferably in a position ortho to a phenolic hydroxyl or phenoxy group, if available;

$R_3$ is alkylene having from one to about six carbon atoms;

$R_4$ is selected from the group consisting of alkylene, cycloalkylene, and aralkylene, the residue of a monohydric or polyhydric alcohol, having from one to about eighteen carbon atoms, and from none to three hydroxyl groups (originally one to four hydroxyl groups);

Y is selected from the group consisting of a direct carbon to carbon bond; this sulfur -S-; oxy oxygen -O-; alkylidene having from one to about six carbon atoms; and cycloalkylidene having from four to about eight carbon atoms; and

n is 1, 2, 3, or 4, according to the valence of $R_4$.

U.S. patent No. 4,371,646 to Minagawa et al, patented February 1, 1983, provides 2, 6-di-tertiary butyl phenyl phosphites having the structure

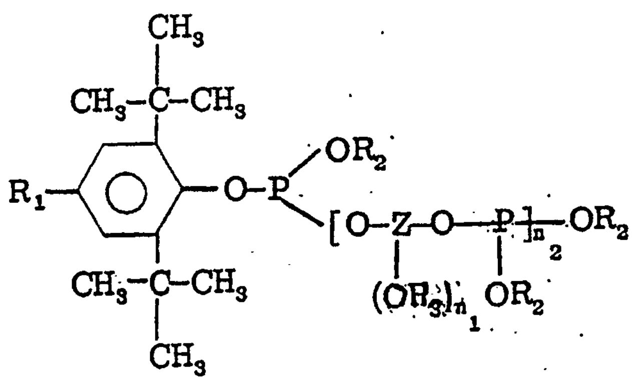

wherein:

$R_1$ is selected from the group consisting of hydrogen, methyl, ethyl and $(CH_2)_m$ COOR, where R is selected from the group consisting of alkyl having from one up to about ten carbon atoms; cycloalkyl having from three up to about twelve carbon atoms; alkaryl and aryl having from six to about twelve carbon atoms; and m is a number within the range from 0 to 5;

$R_2$ is selected from the group consisting of hydrogen, alkyl having from one to about twenty-two carbon

atoms; cycloalkyl having from three up to about twelve carbon atoms; alkaryl and aryl having from six to about eighteen carbon atoms; the residue of a polyhydric alcohol having from two to about eighteen carbon atoms, and from two to three hydroxyl groups; and the residue of a polyphenol having from six to about eighteen carbon atoms and from two to about ten phenolic hydroxyl groups;
$R_3$ is selected from the group consisting of hydrogen and $P(OR_2)_2$;
Z is the bivalent to tetravalent residue of a polyhydric alcohol having from two to about eighteen carbon atoms, and from two to five hydroxyl groups; or of a polyphenol having from six to about eighteen carbon atoms and from two to about ten phenolic hydroxyl groups;
$n_1$ is 0 or 1; and
$n_2$ is a number from 1 to 5.

U.S. patent No. 4,371,647 to Minagawa et al, patented February 1, 1983, provides 2, 6-di-tertiary butyl phenyl pentaerythritol spiro bis-phosphites having the structure:

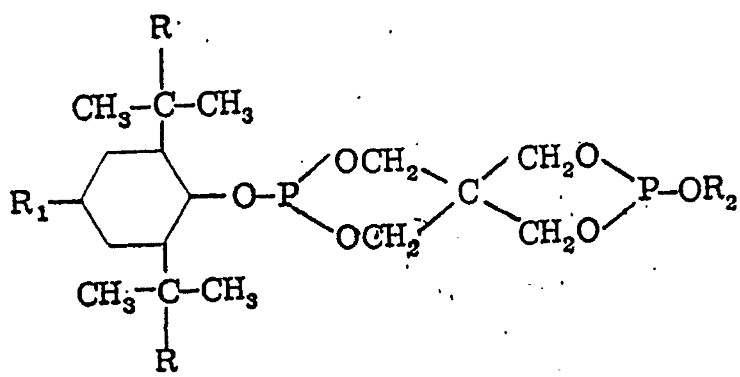

wherein:
R is alkyl having from one to six carbon atoms;
$R_1$ is methyl or ethyl;
$R_2$ is selected from the group consisting of alkyl having from one up to about eighteen carbon atoms; cycloalkyl having from three up to about twelve carbon atoms; and alkaryl and aryl having from six to about thirty carbon atoms; such groups substituted with from one to about four oxy ether -O- and/or carboxylic ester -COO- groups; the residue of a polyhydric alcohol having from two to about eighteen carbon atoms, and from two to about ten hydroxyl groups; and the residue of a polyphenol having from six to about eighteen carbon atoms and from two to about ten phenolic hydroxyl groups.

U.S. patent No. 4,670,492, patented June 2, 1987, to Nakahara, Haruna and Tobita, provides cyclic bis and tris phosphites having the formula:

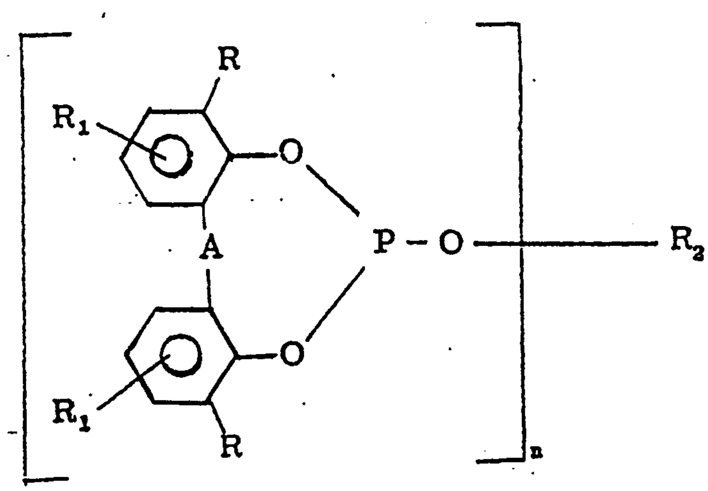

wherein:
A is selected from the group consisting of sulfur; oxygen; alkylidene having from one to about six carbon atoms; cycloalkylidene having from three to about eight carbon atoms; and phenyl and alkyl phenyl

alkylidene having from seven to about fourteen carbon atoms;
R is selected from the group consisting of alkyl having from one to about eighteen carbon atoms; cycloalkyl having from three to about eight carbon atoms; and phenalkylidene and alkyl phenalkylidene having from seven to about twelve carbon atoms;
$R_1$ is selected from the group consisting of hydrogen; alkyl having from one to about eighteen carbon atoms; cycloalkyl having from three to about eight carbon atoms; and phenalkylidene and alkyl phenalkylidene having from seven to about twelve carbon atoms;
n is 2 or 3;
$R_2$ is

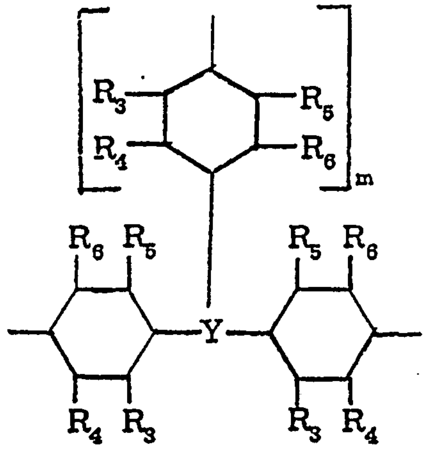

wherein:
m = 0 when n is 2; and 1 when n is 3;
$R_3$, $R_4$, $R_5$, $R_6$ are hydrogen or lower alkyl; and, when the rings are aromatic, at least two of $R_3$, $R_4$, $R_5$ and $R_6$ in each ring is lower alkyl; and
Y is alkylidene having from three to about six carbon atoms; or

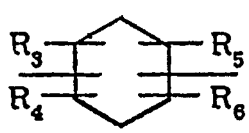 ; or 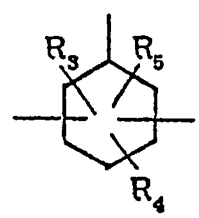 ;

the rings in $R_2$ being saturated or aromatic, and, when the rings are aromatic, at least two of $R_3$, $R_4$, $R_5$ and $R_6$ in each ring is lower alkyl, as well as stabilized synthetic resin compositions containing such phosphites.

Exemplary A alkylidene includes methylidene, ethylidene, isopropylidene, propylidene, isobutylidene, butylidene, cyclohexylidene, cycloheptylidene, cyclopentylidene, cyclobutylidene, benzylidene, methyl benzylidene, isopropyl benzylidene, dimethyl benzylidene, diisopropyl benzylidene;

Exemplary R, $R_1$, $R_3$, $R_4$, $R_5$ and $R_6$ lower alkyl include methyl, ethyl, isopropyl, t-butyl, sec-butyl, t-amyl, and hexyl; exemplary R and $R_1$ higher alkyl include heptyl, octyl, isooctyl, t-octyl, nonyl, t-nonyl, decyl, dodecyl, and octadecyl; exemplary R and $R_1$ cycloalkyl include cyclohexyl, α-methylcyclohexyl, cyclobutyl, cyclopentyl, cycloheptyl, cyclooctyl; exemplary R and $R_1$ phenalkylidene include benzyl, α-methylbenzyl and α,α-dimethylbenzyl, phenethylidene, phenbutylidene, phenhexylidene, xylyl, mesityl, 1,1,3-tris(2-methyl-4-hydroxy-5-t-butylphenyl) butane and 1,3,5-(tris(3,5-di-t-butyl-4-hydroxy benzyl)-2,4,6-trimethylbenzene.

These phosphites have one hindered bisphenol group of the structure:

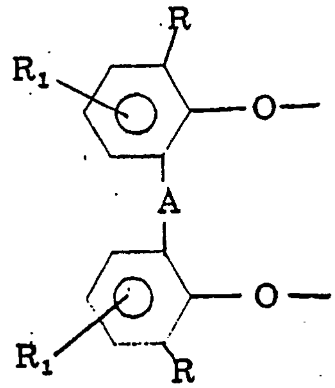

derived from the corresponding phenol. Exemplary phenols include 2,2′-methylenebis(4-methyl-6-t-butylphenol), 2,2′-methylenebis(4-ethyl-6-t-butylphenol), 2,2′-methylenebis (4,6-di-t-butylphenol), 2,2′-methylenebis [4-methyl-6-(α-methylcyclohexyl) phenol], 2,2′-n-butylidenebis(4,6-dimethylphenol), bis-1,1-(21-hydroxy-3′,5′-dimethylphenyl)-3,5,5-tri-methylhexane, 2,2′-cyclohexylidenebis(4-ethyl-6-t-butylphenol), 2,2′-isopropylbenzylidene-bis(4-ethyl-6-t-butylphenol), 2,2′-thiobis(4-t-butyl-6-methylphenol), 2,2′-thiobis(4-methyl-6-t-butylphenol), 2,2′-thiobis (4,6-di-t-butylphenol), 2,2′-methylenebis(4-α-methylbenzyl-6-cyclohexylphenol), 2,2′-methylenebis(4-cyclohexyl-6-α-methylbenzylphenol), 2,2′-ethylidenebis(4-methyl-6-t-butylphenol), 2,2′-ethylidenebis(4-sec-butyl-6-butylphenol), bis(2-hydroxy-3-t-butylphenyl) ether and bis(2-hydroxy-3-propylphenyl) ether.

In accordance with the present invention, the resistance to deterioration when subjected to heat and light of crystalline polyolefin resins which contain residues of Ziegler type complex catalyst supported on a halogen containing magnesium compound is improved by combining therewith a 2,2′-alkylidene-bis-phenylalkyl cyclic phosphite having formula (I):

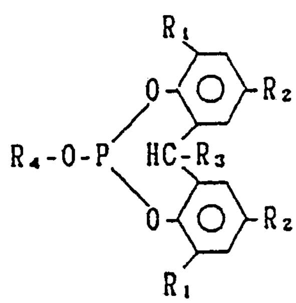

I

wherein:

$R_1$ is tertiary-butyl or tertiary-amyl;

$R_2$ is alkyl having from one to about nine carbon atoms;

$R_3$ is hydrogen or alkyl having from one to about four carbon atoms; and

$R_4$ is selected from the group consisting of alkyl having from one to about thirty carbon atoms; and benzene groups having the formula:

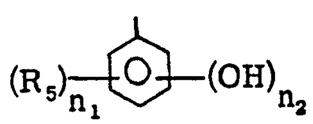

II

where $R_5$ is alkyl having from one to about four carbon atoms, and $n_1$ and $n_2$ are numbers from 0 to 2.

Therefore, the invention provides polyolefin resin compositions having improved resistance to deterioration when exposed to heat and light comprising a crystalline polyolefin resin which contains residues of Ziegler type complex catalyst supported on a halogen containing magnesium compound and an organic phosphite compound represented by formula (I) above, in an amount sufficient to improve resistance to such deterioration.

Exemplary $R_2$, $R_3$, $R_4$ and $R_5$ alkyl having from one to about nine ($R_2$), to about four ($R_3$ or $R_5$), or to about thirty ($R_4$) carbon atoms includes methyl, ethyl, propyl, isopropyl, butyl, sec-butyl, t-butyl, isobutyl, amyl, t-amyl, hexyl, heptyl, octyl, isooctyl, 2-ethylhexyl, t-octyl, nonyl, t-nonyl, decyl, isodecyl, dodecyl, tetradecyl, hexadecyl, octadecyl, eicosyl, docosyl, tetracosyl and triacontyl.

Exemplary $R_4$ benzene groups include phenyl, 4-methylphenyl, 2-hydroxyphenyl, 4-hydroxyphenyl, 3-methyl-4-hydroxyphenyl, 3,5-dimethyl-4-hydroxyphenyl, 3,5-di-t-butyl-4-hydroxyphenyl and 3-t-butyl-4-hydroxy-6-methylphenyl.

Typical phosphites of formula (I) which can be used as stabilizers in the polyolefin resin compositions of the invention include the following:

I-1 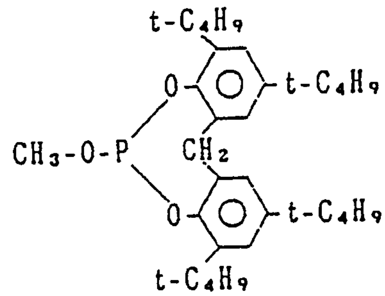

I-2 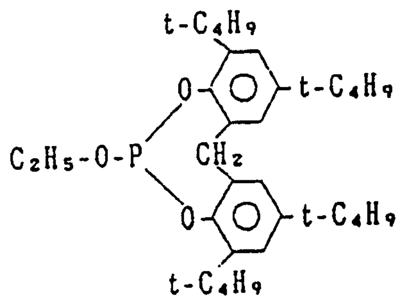

I-3

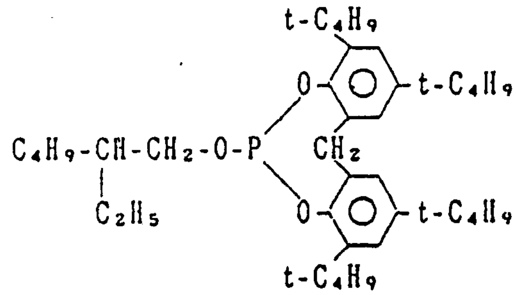

I-4

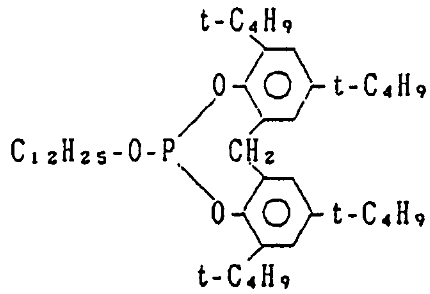

I-5

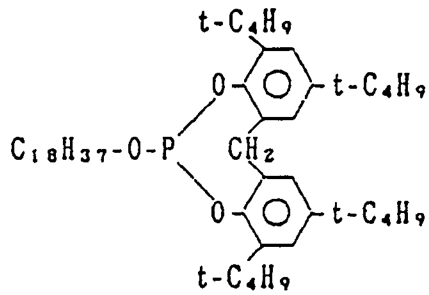

I-6

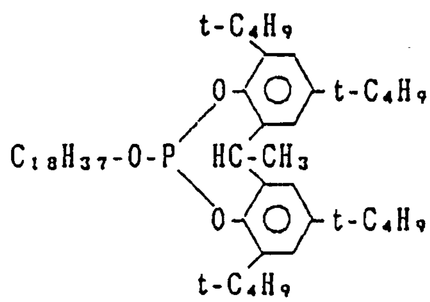

I-7

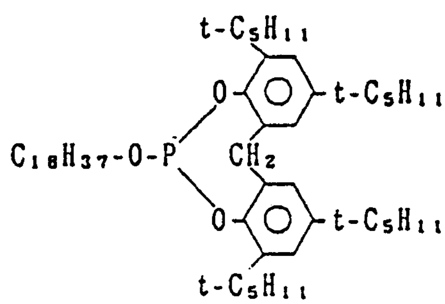

I-8

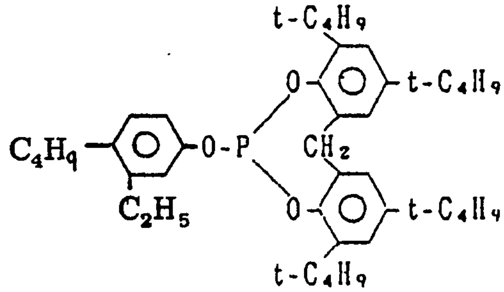

I-9

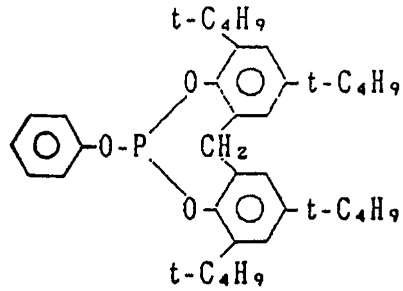

I-10

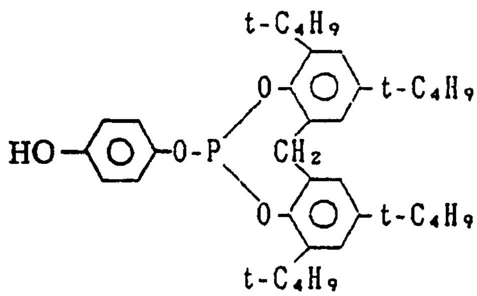

I-11

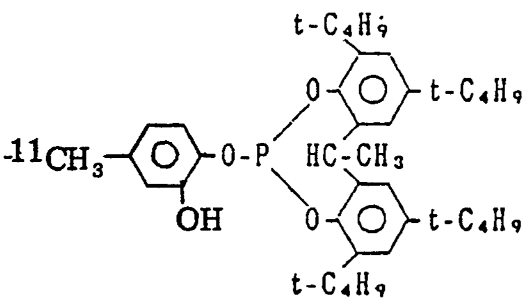

I-12

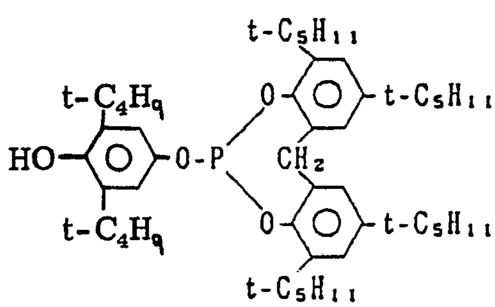

I-13 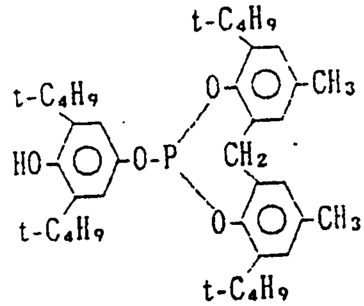

I-14 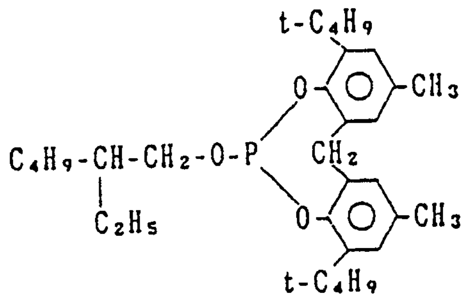

I-15 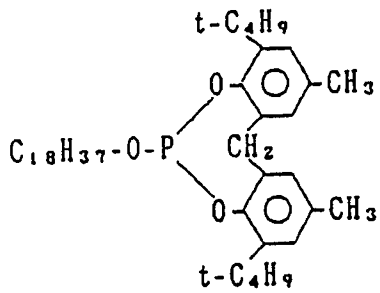

These phosphites can be prepared easily by reacting the corresponding 2,2′-alkylidenebisphenol with phosphorous trichloride, followed by reacting with the corresponding alcohol $R_4OH$. The following Example illustrates this procedure.

## Example A

### Synthesis of 2,2′-methylenebis(4,6-di-t-butylphenyl) stearyl phosphite (Phosphite compound I-5)

A mixture of 2,2′-methylenebis(4,6-di-t-butylphenol) 42.5 g, toluene 100 g, and 0.86 g of triethylamine was heated to 60-65 °C, and then 16.5 g of phosphorous trichloride was added dropwise. The mixture was then stirred for two hours under reflux in a stream of nitrogen.

Excess phosphorous trichloride was distilled off under reduced pressure. After cooling to 60 °C, 12.1 g of triethylamine and 27 g of stearyl alcohol were added, and the mixture was stirred for 4 hours at 80 °C. After cooling, the triethylamine hydrochloride produced was filtered off, and then the solvent was distilled off.

The residue was recrystallized from methanol, and a white powder melting at 65 °C was obtained.

IR ($cm^{-1}$)
2925 and 2850: methylene, 1230 and 1200: t-butyl, 1100: -O-phenyl, 1020: -O-alkyl, 840: P-O-phenyl $H^1$-NMR (60 MHz, with TMS as standard, in $CDCl_3$), $\delta$ value 0.8: 3H, t, $-CH_3$, 1.2-1.3: 73H, sss. t-butyl and stearyl, 3.2-4.4: 4H, dd, methylene and $-O-CH_2-$, 7.2: 4H, s, aromatic hydrogen.

The crystalline polyolefin resins to be used in the present invention are known, and are fully disclosed in the Fujii et al patent No. 4,261,880, starting at column 3. As disclosed there, they have been produced in the presence of a Ziegler-type complex catalyst supported on a halogen-containing magnesium compound,

and have not been subjected to a catalyst residue removal step.

The supported catalyst is a complex catalyst, the transition metal compound component of which is supported on a halogen-containing compound, the complex catalyst having resulted from combining a compound of a transition metal of Group IV to VIII with an organo-metallic compound of a metal of Groups I to III. The terms "carrier" and "supported" refer to transition metal compounds physically mounted on the halogen-containing magnesium compound. There may be physical, physico-chemical or chemical interaction or combination between the two compounds, and the halogen-containing magnesium compound may take part in the catalytic action to some extent.

Typical transition metals include titanium and vanadium. These transition metals are used in their maximum valence states or reduced states, and can be utilized in the most preferable forms of the respective metals for catalytic performance, such as their halides, oxyhalides, alkoxides and alkoxyhalides, exemplified by titanium tetrachloride, titanium trichlorides, titanium dichlorides, tetrabutoxytitanium, tributoxytitanium chloride, dibutoxytitanium dichloride, vanadium tetrachloride, vanadium oxychloride, vanadium trichloride and the like. They can be used alone or in combination.

Typical examples of organometallic compounds include alkyl-aluminum compounds, and especially trialkylaluminums, dialkylaluminum halides, alkylaluminum dihalides, alkylaluminum sesquihalides, dialkylaluminum hydrides and alkylaluminum dihydrides. The alkyl group preferably has from one to about eight carbon atoms, and the halogen is preferably chlorine, bromine or iodine, exemplified by trimethylaluminum, triethylaluminum, tri-n-propylaluminum, tri-n-butylaluminum, tri-i-butylaluminum, tri-n-hexylaluminum, tri-no-octylaluminum, diethylaluminum chloride, diethylaluminum iodide, ethylaluminum dichloride, ethylaluminum sesquichloride and diethylaluminum hydride.

The preferred halogen-containing magnesium compound carriers include magnesium dihalides, oxymagnesium halides, derivatives of oxymagnesium halides wherein the halides have been partly converted to magnesium dihalides by treating the halides with alkylaluminum dihalides such as ethylaluminum dichloride; and magnesium dihalide complexes obtained by treating the dihalides with electron-donor compounds. The present invention may be also effective for polyolefins polymerized using the carrier containing little or no halogen and organometallic compound catalyst containing halogen.

Conventional methods for supporting the transition metal catalyst components on the halogen-containing magnesium compound carriers include grinding both catalyst component and the carrier together in a grinding means such as ball mill; dispersing the carrier into the catalyst component when the latter is in a liquid state, per se, or as a solution in a solvent such as hydrocarbons or halogenated hydrocarbons; and dissolving both compounds in a common solvent.

In order to enhance catalytic performance, a variety of electron donor compounds can be incorporated into any of the catalyst component according to a convenient method in preparation of the catalyst. Examples are disclosed in: Japan Kokai No. 16986/1973, wherein a catalyst for propylene polymerization is prepared by combining (a) a mill-ground mixture of the 1:1 molecular compound obtained by reacting N,N,N′,N′-tetramethylethylene diamine with titanium tetrachloride and anhydrous magnesium chloride with (b) a reaction product obtained by reacting triethylaluminum with ethylbenzoate; and Japan Kokai No. 126590/1975, wherein a propylene polymerization catalyst is prepared by combining (a) triethylaluminum with (b) a solid catalyst component obtained by grinding both anhydrous magnesium chloride and ethylbenzoate in a ball mill, suspending the resulting ground product in titanium tetrachloride to cause titanium tetrachloride to be supported on magnesium chloride, and then treating the resulting mixture with hexane to remove unsupported titanium tetrachloride.

The weight ratio of the transition metal compound to the organometallic compound to the halogen-containing magnesium compound carrier is not critical but will be generally within the range of about 1:2:2 to 1:200:50.

Polyolefins containing catalyst residues as prepared in the presence of the above-mentioned catalysts and stabilized in the present invention include polyethylene, polypropylene, polybutene-1, poly-4-methylpentene-1 and other crystalline homopolyolefins, as well as crystalline olefin copolymers composed of two or more olefins, such as ethylene-propylene copolymers, or composed of an olefin monomer and a copolymerizable comonomer. The polyolefins can be prepared in the presence of such catalysts according to known polymerization processes, such as suspension polymerization in a solvent; suspension polymerization in a liquefied monomer; and gas phase polymerization wherein a monomer is present in a gaseous state without dilution.

The polyolefins stabilized in the present invention contain such catalyst residues because they have been produced through polymerization over the above mentioned catalysts, and have not yet been subjected to a catalyst residue removal step.

The term "catalyst residue removal step" used refers to any step for removing the catalyst residue from

the polymerized polyolefin, treating the polyolefin with a compound which can react with the catalyst residue and inactivate or solubilize the residue, such as e.g., alcohols or water, and then removing the inactivated or solubilized catalyst residue by physical means, such as filtration, washing and centrifuging. Thus, in the case of suspension polymerization, the step of separating the resulting polymer from a dispersion medium such as a solvent or a liquefied monomer is not a catalyst residue removal step, although catalyst dissolved in the dispersion medium may be removed during the separation. Neither does the step of adding a small amount of catalyst poison such as ethers, alcohols, ketones, esters and water to the resulting polymer, to inactivate the catalyst remaining after the completion of polymerization, nor the step of treating the resulting polymer suspension with a gas such as steam or nitrogen to remove the dispersion medium.

Therefore, the crystalline polyolefins which have not yet been subjected to catalyst residue removal step contain substantial amounts of the magnesium compounds contained in the polymerization catalyst.

The stabilized polyolefin compositions of the present invention can be obtained by incorporating an organic phosphite of formula (I), together with auxiliary components if desired, into the polyolefin resins containing catalyst residue to produce a thoroughly blended or mixed intimate composition, according to any known method.

Known methods for preparation of such compositions include, for example, incorporating the required components into the polymer containing an unreactive monomer (and a dispersion medium according to the polymerization process) following the polymerization step; incorporating the components into a polymer after an unreacted monomer and a dispersion medium have been removed; and incorporating the components into a dry polymer obtained in powder form, when the polymer is being pelletized. After the incorporation, the mixture is generally blended into an intimate composition at a temperature at which the polyolefin resin can be at least partly molten.

The organic phosphite stabilizers of this invention can be used in combination with other conventional heat and light stabilizers for polyolefin resins, such as, for example, phenolic antioxidants, such as those disclosed in U.S. patent No. 4,670,492, referred to above; thioether antioxidants; and ultraviolet light stabilizers.

Exemplary preferred conventional phenolic antioxidants which can be employed together with the organic phosphite stabilizers of the invention include 2,6-di-t-butyl-p-cresol, 2,6-diphenyl-4-octadecyloxyphenol, distearyl-(3,5-di-t-butyl-4-hydroxybenzyl) phosphonate, 4,4′-thiobis(6-t-butyl-m-cresol), 2,2′-methylenebis(4-methyl-6-t-butylphenol), 2,2′-methylene-bis(4-ethyl-6-t-butylphenol), ethyleneglycolbis(3,3-bis(4-hydroxy-3-t-butyl)butyrate), 4,4′-butylidenebis(6-t-butyl-m-cresol), 2,2′-ethylidenebis(4,6-di-t-butylphenol), 2,2′-ethylidenebis(4-sec-butyl-6-t-butylphenol), 2-t-butyl-4-methyl-6-(2′-acryloyloxy-3′-t-butyl-5′-methylbenzyl)phenol, bis(2-t-butyl-4-methyl-6-(2′-hydroxy-3′-t-butyl-5′-methylbenzyl)phenyl) terephthalate, 1,1,3-tris(2′-methyl-4′-hydroxy-5′-t-butylphenyl)butane, 1,3,5-tris(3′,5′-di-t-butyl-4′-hydroxybenzyl) isocyanurate, 1,3,5-tris(2′,6′-dimethyl-3′-hydroxy-4-′t-butylbenzyl)isocyanurate.

The polyvalent metal salts of an organic acid are of organic acids having from about six to about twenty-four carbon atoms. The polyvalent metal can be any metal of Group II of the Periodic Table, such as zinc, calcium, cadmium, barium, magnesium and strontium. The alkali metal salts and heavy metal salts such as lead salts are unsatisfactory. The acid can be any organic non-nitrogenous monocarboxylic acid having from six to twenty-four carbon atoms. The aliphatic, aromatic, alicyclic and oxygen-containing heterocyclic organic acids are operable as a class. By the term "aliphatic acid" is meant any open chain carboxylic acid, substituted, if desired, with nonreactive groups, such as halogen, sulfur and hydroxyl. By the term "alicyclic" it will be understood that there is intended any cyclic acid in which the ring is nonaromatic and composed solely of carbon atoms, and such acids may if desired have inert, nonreactive substituents such as halogen, hydroxyl, alkyl radicals, alkenyl radicals and other carbocyclic ring structures condensed therewith. The oxygen-containing heterocyclic compounds can be aromatic or nonaromatic and can include oxygen and carbon in the ring structure, such as alkyl-substituted furoic acid. The aromatic acids likewise can have nonreactive ring substituents such as halogen, alkyl and alkenyl groups, and other saturated or aromatic rings condensed therewith.

As exemplary of the acids which can be used in the form of their metal salts there can be mentioned the following: hexoic acid, 2-ethylhexoic acid, n-octoic acid, isooctoic acid, capric acid, undecylic acid, lauric acid, myristic acid, palmitic acid, margaric acid, stearic acid, oleic acid, ricinoleic acid, behenic acid, chlorocaproic acid, hydroxy capric acid, benzoic acid, phenylacetic acid, butyl benzoic acid, ethyl benzoic acid, propyl benzoic acid, hexyl benzoic acid, salicylic acid, naphthoic acid, 1-naphthalene acetic acid, orthobenzoyl benzoic acid, naphthenic acids derived from petroleum, abietic acid, dihydroabietic acid, hexahydrobenzoic acid, and methyl furoic acid.

The water-insoluble salts are preferred, because they are not leached out when the plastic is in contact

with water. Where these salts are not known, they are made by the usual types of reactions, such as by mixing the acid, or anhydride with the corresponding oxide or hydroxide of the metal in a liquid solvent, and heating, if necessary, until salt formation is complete.

Thiodipropionic acid esters have the following formula:

$R_1OOCCH_2CH_2$-S-$CH_2CH_2COOY$

in which $R_1$ is an organic radical selected from the group consisting of hydrocarbon radicals such as alkyl, alkenyl, aryl, cycloalkyl and mixed alkyl aryl and mixed alkyl cycloalkyl radicals; hydroxyalkyl and hydroxyalkyloxyalkylene radicals; and esters thereof with aliphatic carboxylic acids; and Y is selected from the group consisting of (a) hydrogen, (b) a second R radical $R_2$, which can be the same as or different from the $R_1$ radical, (c) a polymeric chain of n thiodipropionic acid ester units:

$-XO[OCCH_2CH_2SCH_2CH_2COOXO]_n\ OCCH_2CH_2$-S-$CH_2CH_2COOZ$

where Z is hydrogen, $R_2$ or M, n is the number of thiodipropionic acid ester units in the chain, and X is a bivalent hydrocarbon group of the type of $R_1$,that is, alkylene, alkenylene, cycloalkylene, mixed alkylenearylene and mixed alkylene-cycloalkylene radicals; hydroxyalkylene and hydroxyalkyloxyalkylene radicals; and esters thereof with aliphatic carboxylic acids; the value of n can range upwards from 0, but there is no upper limit on n except as is governed by the ratio of carbon atoms to sulfur atoms as stated below; and (d) a polyvalent metal M of Group II of the periodic table such as zinc, calcium, cadmium, barium, magnesium and strontium.

The molecular weights of the R and Y radicals are taken such that with the remainder of the molecule the thiodipropionic ester has a total of from about ten to about sixty carbon atoms per sulfur atom.

Accordingly, the various thiodipropionic acid ester species coming within the above-designed categories within the general formula can be defined as follows:

(a) $R_1OOCCH_2CH_2SCH_2CH_2COOH$

(b) $R_1\ OOCCH_2CH_2SCH_2CH_2COOR_2$

(c) $R_1O[OCCH_2CH_2SCH_2CH_2COOX\text{-}O]_nOCCH_2CH_2SCH_2CH_2COOZ$

(d) $R_1OOCCH_2CH_2SCH_2CH_2COOM$

In the above formulae $R_1$ and $R_2$, M, X and Z are the same as before and the value of $n_1$ can range upwards from 1, but there is no upper limit on $n_1$ except as is imposed by the ratio of carbon atoms, as stated below. In the polymer (c), as in the other forms of thiodipropionic acid ester, the total number of carbon atoms per sulfur atom is within the range from about ten to about sixty.

The R radical of these esters is important in furnishing compatibility with the polymer. The Y radical is desirably a different radical, $R_2$ or M or a polymer, where R is rather low in molecular weight, so as to compensate for this in obtaining the optimum compatibility and nonvolatility. Where Y is a metal, the thiodipropionic acid ester furnishes the beneficial properties of the polyvalent metal salt which is described above.

The aryl, alkyl, alkenyl, and cycloalkyl groups may, if desired, contain inert, nonreactive substituents such as halogen and other carboxyclic and heterocyclic ring structures condensed therewith.

Typical R radicals are, for example, methyl, ethyl, propyl, isopropyl, butyl, isobutyl, t-butyl, amyl, isoamyl, n-octyl, isooctyl, 2-ethyl hexyl, t-octyl, decyl, dodecyl, octadecyl, allyl, hexenyl, linoleyl, ricinoleyl, oleyl, phenyl, xylyl, tolyl, ethylphenyl, naphthyl, cyclohexyl, benzyl, cyclopentyl, methylcyclohexyl, ethylcyclohexyl, and naphthenyl, hydroxyethyl, hydroxypropyl, glyceryl, sorbityl, pentaerythrityl, and polyoxyalkylene radicals such as those derived from diethylene glycol, triethylene glycol, polyoxypropylene glycol, polyoxyethylene glycol, and polyoxypropyleneoxyethylene glycol, and esters thereof with any of the organic acids named below in the discussion of the polyvalent metal salts, including in addition those organic acids having from two to five carbon atoms, such as acetic, propionic, butyric and valeric acids.

Typical X radicals are alkylene radicals such as ethylene, tetramethylene, hexamethylene, decamethylene, alkyl-substituted alkylene radicals such as 1,2-propylene,

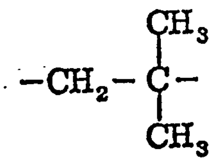 and 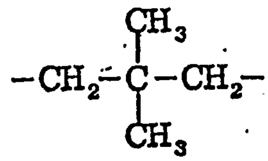

arylene radicals such as phenylene 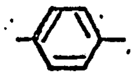

methylenephenylene 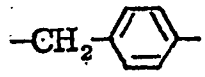

dimethylene phenylene 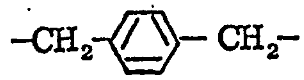

and alicyclylene such as cyclohexylene 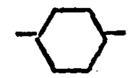

and cyclopentylene 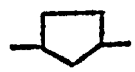

As exemplary of the thiodipropionic acid esters which can be used, there can be mentioned the following: monolauryl thiodipropionic acid, dilauryl thiodipropionate, butyl stearyl thiodipropionate, 2-ethylhexyl lauryl thiodipropionate, di-2-ethylhexyl-thiodipropionate, diisodecyl thiodipropionate, isodecyl phenyl thiodipropionate, benzyl lauryl thiodipropionate, benzyl phenyl thiodipropionate, the diester of mixed coconut fatty alcohols and thiodipropionic acid, the diester of mixed tallow fatty alcohols and thiodipropionic acid, the acid ester of mixed cottonseed oil fatty alcohols and thiodipropionic acid, the acid ester of mixed soyabean oil fatty alcohols and thiodipropionic acid, cyclohexyl nonyl thiodipropionate, monooleyl thiodipropionic acid, hydroxyethyl lauryl thiodipropionate, monoglyceryl thiodipropionic acid, glyceryl monostearate monothiodipropionate, sorbityl isodecyl thiodipropionate, the polyester of diethylene glycol and thiodipropionic acid, the polyester of triethylene glycol and thiodipropionic acid, the polyester of hexamethylene glycol and thiodipropionic acid, the polyester of pentaerythritol and thiodipropionic acid, the polyester of octamethylene glycol and thiodipropionic acid, the polyester of p-dibenzyl alcohol and thiodipropionic acid, ethylbenzyl lauryl thiodipropionate, strontium stearyl thiodipropionate, magnesium oleyl thiodipropionate, calcium dodecyl benzyl thiodipropionate, and mono(dodecylbenzyl) thiodipropionic acid.

These esters are for the most part known compounds, but where they are not available, they are readily prepared by esterification of thiodipropionic acid and the corresponding alcohol.

Also useful are:

(1) Thioalkanoic acid amides of Tokuno et al Japanese patent No. 16,286/68 having the formula:

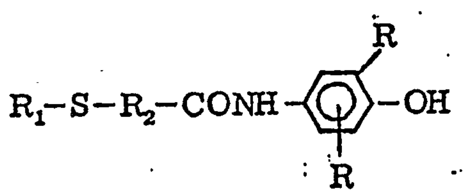

R is alkyl of one to eight carbon atoms, $R_1$ is alkyl of six to twenty-four carbon atoms, and $R_2$ is alkylene of one to six carbon atoms.

(2) Thioalkanoic acid amides of 1,3,5-triazines of Ozeki et al Japanese patent No. 20,366/68 having the formula:

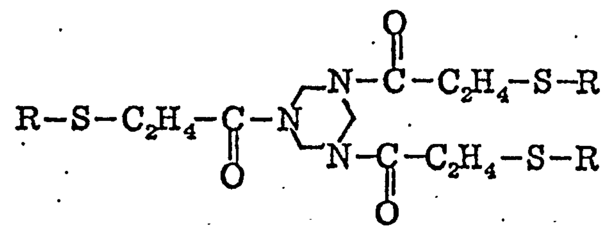

R is alkyl of eight to eighteen carbon atoms.

(3) Bis-thioalkanoic acid amides of Yamamoto et al Japanese patent No. 23,765/68 having the formula:

R-S-$C_2H_4$- C -NH-NH- C -$C_2H_4$-S-R
‖ ‖
O O

R is alkyl of more than six carbon atoms, aryl or aralkyl.

(4) Bis-thioalkylanoic acid amides of Ozeki et al Japanese patent No. 26,184/69 having the formula:

R-S-$C_2H_4$- C -NH-NH- C -$R_1$- C -NH-NH- C -$C_2H_4$-S-R
‖ ‖ ‖ ‖
O O O O

R is alkyl of twelve to eighteen carbon atoms, and $R_1$ is alkylene of one to ten carbon atoms, cycloalkylene, or arylene.

(5) Bis-alkylene thioalkanoic acid amides of Ozeki Japanese patent No. 31,464/69 having the formula:

R-S-$C_2H_4$- C -NH-$CH_2$-NH- C -$C_2H_4$-S-R
‖ ‖
O O

R is alkyl of more than six carbon atoms, aryl, or aralkyl.

(6) Thioalkanoic acid amide derivatives of Minagawa et al, published Japanese application No. 106,484/74 having the formula:

R-S-$C_2H_4$- C -NH-NH- C - C -NH-NH- C -$C_2H_4$-S-R
‖ ‖ ‖ ‖
O O O O

R is hydrocarbyl of one to twenty carbon atoms.

(7) Alkylene bis-thioalkanoic acid amides of U.S. patent No. 4,279,805 to Ohzeki et al, patented July 21, 1981, having the general formula:

$R_1$-S-$R_2$- C -NH-$R_3$-NH- C -$R_2$-S-$R_1$
‖ ‖
O O

wherein:

$R_1$ is alkyl having from one to about fifty carbon atoms;

$R_2$ is alkylene having from one to about three carbon atoms; and

$R_3$ is alkylene having from about two to about twelve carbon atoms.

β-Alkylthiopropionic acid esters having the general formula:

R-S-$C_2H_4$COOR-$(-R')_n$

wherein:

R is alkyl of four to twenty carbon atoms;

n is a number from 1 to 6; and

R′ is the residue of an alcohol having from one to six hydroxyl groups.

Pentaerythritol tetra dodecyl thio propionate is an example of this group.

Exemplary preferred thioether antioxidants include dialkylthiodipropionates such as dilauryl-, dimyristyl- and di-stearylthiodipropionate; and esters of β-alkylthiopropionic acid with polyhydric alcohols such as pentaerythritol tetrakis (β-dodecylthiopropionate).

Conventional ultraviolet light stabilizers can be employed with the stabilizers of the invention, including hydroxybenzophenones such as 2-hydroxy-4-methoxybenzophenone, 2-hydroxy-4-n-octoxybenzophenone, 5,5′-methylenebis(2-hydroxy-4-methoxy- benzophenone) and 2,4-dihydroxybenzophenone; benzotriazoles such as 2-(2-hydroxy-3-t-butyl-5-methylphenyl-5-chlorobenzotriazole, 2-(2-hydroxy-3,5-di-t-butylphenyl)-5-chlorobenzotriazole, 2-(2-hydroxy-5-methylphenyl) benzotriazole, 2-(2-hydroxy-5-t-octylphenyl) benzotriazole, 2-(2-hydroxy-3,5-di-t-butylphenyl) benzotriazole, 2-(2-hydroxy-3,5-di-cumylphenyl) benzotriazole, and 2,2′-methylenebis(4-t-octyl-6-benzotriazolylphenol); benzoates such as phenylsalicylate, resorcinol-monobenzoate, 2,4-di-t-butylphenyl-3,5-di-t-butyl-4-hydroxybenzoate and hexadecyl-3,5-di-t-butyl-4-hydroxybenzoate; substituted oxanilides such as 2-ethyl-2′-ethoxy-4′-dodecyloxanilide and 2-ethoxy-4′-dodecyloxanilide; cyanoacrylates such as ethyl-α-cyano-β,β-diphenylacrylate and methyl-2-cyano-3-methyl-3-(p-methoxyphenyl) acrylate; and hindered amine light stabilizers such as 2,2,6,6-tetramethyl-4-piperidylstearate, 1,2,2,6,6-pentamethyl-4-piperidylstearate, 2,2,6,6-tetramethyl-4-piperidylbenzoate, bis-(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)butane-1,2,3,4-tetracarboxylate, tetrakis(1,2,2,6,6-tetramethyl-4-piperidyl)-butane-1,2,3,4-tetracarboxylate, bis(1,2,2,6,6-pentamethyl-4-piperidyl)di(tridecyl)-butane-1,2,3,4-tetracarboxylate, bis(1,2,2,6,6-pentamethyl-4-piperidyl)-2-butyl-2-(3,5-di-t-butyl-hydroxybenzyl) malonate, condensate of 1-(2-hydroxyethyl)-2,2,6,6-tetramethyl-4-piperidinol with diethylsuccinate, condensate of 1,6-bis(2,2,6,6-tetramethyl-4-piperidylamino) hexane with dibromoethane, condensate of 2-t-octylamino-4,6-dichlorotriazine with 1,6-bis(2,2,6,6-tetramethyl-4-piperidylamino) hexane and condensate of 2-morpholino-4,6-dichlorotriazine with 1,6-bis(2,2,6,6-tetramethyl-4-piperidylamino) hexane.

In addition, other conventional additives for synthetic resins, such as heavy metal deactivators, nucleating agents, metal soaps, plasticizers, flame retardants, lubricants, processing aids, blowing agents, pigments, fillers and antistatic agents can be employed.

A sufficient amount of the organic phosphite and any stabilizers in combination therewith is used to improve the resistance of the polyolefin resin to deterioration in physical properties when exposed to heat and/or light, including, for example, discoloration, reduction in melt viscosity, and embrittlement. Very small amounts are usually adequate. Amounts within the range from about 0.001 to about 20% total stabilizers including the cyclic phosphite I and phenolic antioxidant II heat stabilizers of the invention by weight of the polymer are satisfactory. Preferably, from 0.01 to 10% is employed for optimum stabilization.

The preferred amount of the phosphite compound of Formula (I) is from 0.001 to 10, more preferably from 0.01 to 3, parts by weight based on 100 parts by weight of the crystalline polyolefin resin.

The preferred amount of any phenolic antioxidant that may be included is from 0.001 to 10, more preferably from 0.01 to 3, parts by weight based on 100 parts by weight of the crystalline polyolefin resin.

When all components are solids, stabilizer systems including the organic phosphite and any other stabilizers in combinations with any other desired ingredients are readily rendered in solid particulate form, comprising a blend of:

(a) phosphite of Formula I in an amount from about 10 to about 35 parts by weight;
(b) phenolic antioxidant in an amount from about 10 to about 35 parts by weight;
(c) other heat or light stabilizers in an amount of from about 10 to about 35 parts by weight.

In addition, other conventional additives for polyolefin resins, such as heavy metal deactivators, nucleating agents, metal soaps, plasticizers, flame retardants, lubricants, processing aids, blowing agents, pigments, fillers and antistatic agents can be included with the polyolefin resin.

The stabilized polymer can be worked into the desired shape, such as by milling, calendering, extruding or injection molding or fiber-forming. In such operations, it will be found to have a considerably improved resistance to reduction in melt viscosity during the heating, as well as a better resistance to discoloration and embrittlement on ageing and heating.

Molded articles prepared from the composition of this invention have excellent heat stability, odor, color, corrosiveness and weatherability.

The following Examples illustrate preferred embodiments of stabilizer and synthetic resin compositions of the invention.

## Examples 1 to 6

Octadecyl-3-(3,5-di-t-butyl-4-hydroxyphenyl) propionate 0.1 part by weight and 0.1 part by weight of the organic phosphite shown in Table I were thoroughly blended with 100 parts by weight of high density polyethylene resin containing catalyst residues including 4 ppm titanium, 51 ppm aluminum, 3 ppm magnesium, and 42 ppm silicon.

The resulting composition was pelletized using a conventional extruder at a resin temperature of 250 °C, and injection molded at 250 °C to prepare test pieces 1 mm thick.

The test pieces were tested for heat stability, change of color, and weatherability as follows.

The test pieces were heated in a Geer oven at 150 °C until failure, as denoted by blackening or darkening of color and embrittlement,and the hours to failure were noted.

The change in color of the test pieces is expressed by Yellowness Index, measured using a Hunter colorimeter, before and after heating for 72 hours at 150 °C.

The test pieces were placed in a Weatherometer and irradiated at 63 °C for 100 hours and the whiteness index of the test pieces before and after 100 hours then was determined using the Hunter colorimeter.

The results are shown in Table I.

Table I

| | Phosphite | Hours to Failure | Yellowness Index Original | Yellowness Index After 72hrs Heating | Whiteness Index Original | Whiteness Index After 100 hrs Irradiation at 63°C |
|---|---|---|---|---|---|---|
| **Control** | | | | | | |
| 1 | None | 82 | 9.2 | 16.6 | 86.5 | 80.6 |
| 2 | Tris(nonylphenyl)phosphite 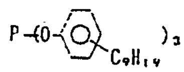 | 94 | 8.6 | 11.8 | 89.8 | 82.3 |
| 3 | 4,4'-Butylidenebis(6-t-butyl-3-methyl-4-hydroxyphenol) tetra(tridecyl)phosphite 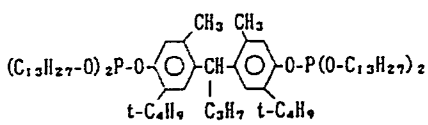 | 132 | 7.8 | 10.7 | 92.1 | 84.6 |
| 4 | Distearyl pentaerythritol diphosphite 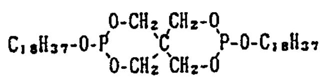 | 116 | 8.2 | 11.0 | 90.8 | 83.5 |
| **Examples** | | | | | | |
| 1 | 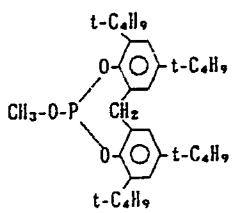 | 172 | 6.9 | 8.4 | 92.9 | 90.1 |

Table I (continued)

| | Phosphite | Hours to Failure | Yellowness Index | | Whiteness Index | |
|---|---|---|---|---|---|---|
| | | | Original | After 72hrs Heating | Original | After 100 hrs Irradiation at 63°C |
| Examples | | | | | | |
| 2 | 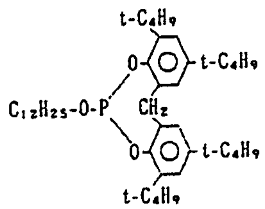 | 186 | 6.6 | 8.2 | 93.3 | 90.6 |
| 3 | 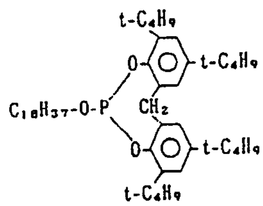 | 156 | 7.3 | 9.5 | 96.4 | 93.4 |
| 4 | 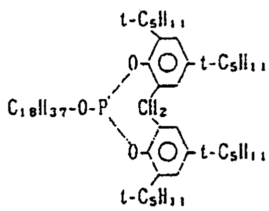 | 180 | 7.1 | 8.6 | 94.6 | 91.2 |
| 5 | 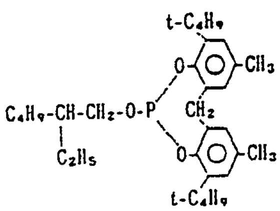 | 166 | 6.8 | 8.1 | 93.4 | 90.8 |
| 6 | 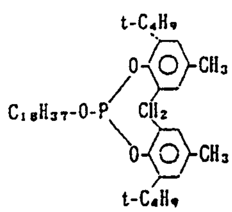 | 158 | 7.0 | 8.3 | 93.8 | 90.0 |

The improvement in heat stability (hours to failure), resistance to change in color (yellowness index) and weatherability (whiteness index) when the phosphite of the invention is added, as compared to the three Fujii et al phosphites Controls 2, 3 and 4 from Fujii et al class (1) (column 5, lines 65 to 66) class (2) (column 6, lines 8 to 10) and class (4) (column 6, lines 28 to 29), is apparent from the data.

## Examples 7 to 12

Pentaerythritol tetrakis(3-(3,5-di-t-butyl-4-hydroxyphenyl)propionate 0.1 part by weight and 0.1 part by

weight of the organic phosphite shown in Table II were thoroughly blended with 100 parts by weight of low density ethylene-butene-1 copolymer resin containing catalyst residues, 3 ppm titanium, 82 ppm aluminum, 4 ppm magnesium and 76 ppm silicon.

The resulting composition was pelletized using a conventional extruder at a resin temperature of 190 ° C, and injection molded at 190 ° C to prepare test pieces 1 mm thick.

The test pieces were tested for heat stability, change of color, and weatherability as follows.

The test pieces were heated in a Geer oven at 150 ° C until failure, as denoted by blackening or darkening of color and embrittlement, and the hours to failure were noted.

The change in color of the test pieces is expressed by Yellowness Index, measured using a Hunter colorimeter, before and after heating for 144 hours at 150 ° C.

The test pieces were placed in a Weatherometer and irradiated at 63 ° C for 100 hours and the whiteness index of the test pieces before and after 100 hours then was determined using the Hunter colorimeter.

The results are shown in Table II.

Table II

| | Phosphite | Hours to Failure | Yellowness Index | | Whiteness Index | |
|---|---|---|---|---|---|---|
| | | | Original | After 144 hrs Heating at 150 °C | Original | After 100 hrs Irradiation at 63 °C |
| Controls | | | | | | |
| 1 | None | 181 | 13.5 | 21.3 | 70.5 | 67.9 |
| 2 | Tris(nonylphenyl)phosphite 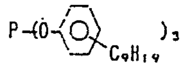 | 192 | 12.4 | 20.1 | 81.4 | 76.9 |
| 3 | 4,4'-Butylidenebis(6-t-butyl-3-methyl-4-hydroxyphenol) tetra(tridecyl)phosphite 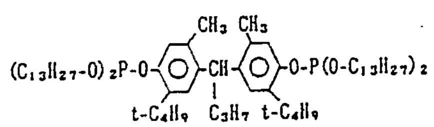 | 239 | 9.3 | 15.5 | 88.8 | 82.1 |
| 4 | Distearyl pentaerythritol diphosphite 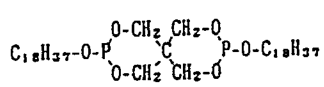 | 213 | 10.8 | 18.7 | 82.8 | 78.3 |
| Examples | | | | | | |
| 7 | 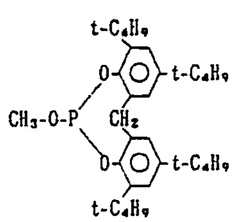 | 319 | 8.6 | 10.2 | 92.5 | 90.0 |

Table II (continued)

| Phosphite | | Hours to Failure | Yellowness Index: Original | Yellowness Index: After 144 hrs Heating at 150 °C | Whiteness Index: Original | Whiteness Index: After 100 hrs Irradiation at 63 °C |
|---|---|---|---|---|---|---|
| Examples | | | | | | |
| 8 | 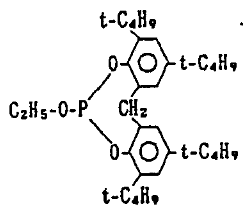 | 337 | 8.3 | 9.2 | 92.3 | 89.8 |
| 9 | 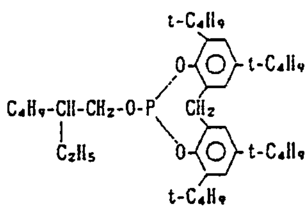 | 287 | 8.8 | 10.8 | 93.5 | 92.3 |
| 10 | 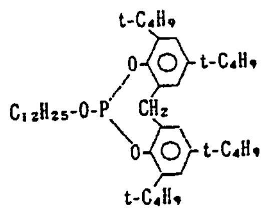 | 311 | 8.6 | 10.0 | 92.0 | 89.7 |
| 11 | 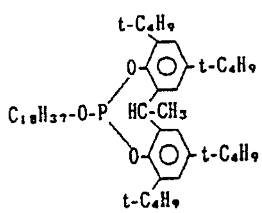 | 290 | 8.7 | 10.4 | 93.3 | 92.1 |
| 12 | 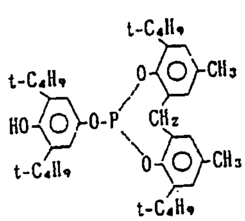 | 304 | 8.2 | 9.9 | 92.1 | 90.8 |

The improvement in heat stability (hours to failure), resistance to change in color (yellowness index) and weatherability (whiteness index) when the phosphite of the invention is added, as compared to the three Fujii et al phosphites Controls 2, 3 and 4 from Fujii et al class (1) (column 5, lines 65 to 66), class (2) (column 6, lines 8 to 10) and class (4) (column 6, lines 28 to 29), is apparent from the data.

Examples 13 to 17

1,3,5-Tris(3′,5′-di-t-butyl-4′-hydroxybenzyl) isocyanurate 0.1 part by weight, 0.1 part by weight of the organic phosphite compound as shown in Table III and 0.05 part by weight of calcium stearate were thoroughly blended with 100 parts by weight of polypropylene resin which had not yet been subjected to a catalyst residue removal step and containing 4 ppm titanium, 13 ppm aluminum and 69 ppm magnesium.

Thereafter, the resultant composition was pelletized using a conventional extruder at a resin temperature of 250 °C and injection molded at 250 °C to prepare test pieces 1 mm thick.

The test pieces were tested for heat stability, change of color, and weatherability as follows.

The test pieces were heated in a Geer oven at 150 °C until failure, as denoted by blackening or darkening of color and embrittlement, and the hours to failure were noted.

The change in color of the test pieces is expressed by Yellowness Index, measured using a Hunter colorimeter, before and after heating for 1000 hours at 150 °C.

The test pieces were placed in a Weatherometer and irradiated at 63 °C for 100 hours and the whiteness index of the test pieces before and after 100 hours then was determined using the Hunter colorimeter.

The results are shown in Table III.

Table III

| | Phosphite | Hours to Failure | Yellowness Index: Original | Yellowness Index: After 1000 hrs Heating at 150 °C | Whiteness Index: Original | Whiteness Index: After 100 hrs Irradiation at 63 °C |
|---|---|---|---|---|---|---|
| **Controls** | | | | | | |
| 1 | None | 620 | 10.7 | 22.1 | 80.6 | 72.8 |
| 2 | Tris(nonylphenyl)phosphite 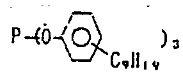 | 700 | 12.2 | 21.0 | 84.4 | 79.8 |
| 3 | 4,4′-Butylidenebis(6-t-butyl-3-methyl-4-hydroxyphenol) tetra(tridecyl)phosphite 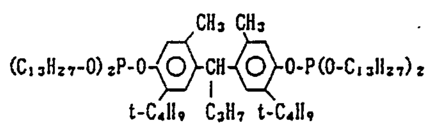 | 920 | 12.7 | 20.8 | 87.1 | 85.1 |
| 4 | Distearyl pentaerythritol diphosphite 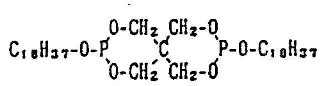 | 770 | 10.3 | 21.3 | 86.0 | 83.8 |
| **Examples** | | | | | | |
| 13 | 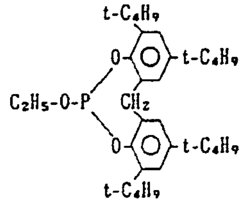 | 1380 | 9.9 | 15.7 | 91.7 | 90.6 |

Table III (continued)

| | Phosphite | Hours to Failure | Yellowness Index Original | Yellowness Index After 1000 hrs Heating at 150°C | Whiteness Index Original | Whiteness Index After 100 hrs Irradiation at 63°C |
|---|---|---|---|---|---|---|
| Examples | | | | | | |
| 14 | 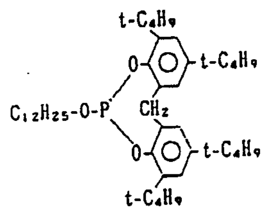 | 1350 | 10.2 | 16.2 | 89.9 | 88.2 |
| 15 | 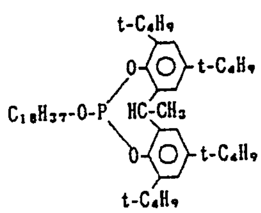 | 1300 | 8.5 | 14.5 | 94.8 | 93.9 |
| 16 | 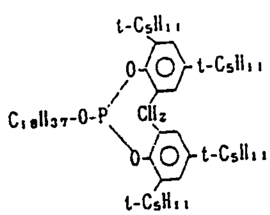 | 1230 | 10.3 | 14.3 | 92.0 | 91.0 |
| 17 | 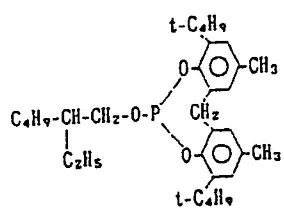 | 1350 | 10.0 | 14.4 | 92.3 | 91.7 |

The improvement in heat stability (hours to failure), resistance to change in color (yellowness index) and weatherability (whiteness index) when the phosphite of the invention is added, as compared to the three Fujii et al phosphites Controls 2, 3, and 4 from Fujii et al class (1) (column 5, lines 65 to 66), class (2) (column 6, lines 8 to 10) and class (4) (column 6, lines 28 to 29), is apparent from the data.

## Examples 18 to 23

Octadecyl-3-(3,5-di-t-butyl-4-hydroxyphenyl) propionate 0.1 part by weight, 0.15 part by weight of the organic phosphite shown in Table IV and 0.05 part by weight of calcium stearate were thoroughly blended with 100 parts by weight of polypropylene resin containing catalyst residues, 4 ppm titanium, 13 ppm aluminum and 270 ppm magnesium.

The resulting composition was pelletized using a conventional extruder at a resin temperature of 250°C, and injection molded at 250°C to prepare test pieces 1 mm thick.

The test pieces were tested for heat stability, change of color, and weatherability as follows.

The test pieces were heated in a Geer oven at 150 °C until failure, as denoted by blackening or darkening of color and embirttlement, and the hours to failure were noted.

The change in color of the test pieces is expressed by Yellowness Index, measured using a Hunter colorimeter, before and after heating for 1000 hours at 150 °C.

The test pieces were placed in a Weatherometer and irradiated at 63 °C for 100 hours and the whiteness index of the test pieces before and after 100 hours then was determined using the Hunter colorimeter.

The results are shown in Table IV.

Table IV

| Phosphite | Hours to Failure | Yellowness Index: Original | Yellowness Index: After 1000 hrs Heating | Whiteness Index: Original | Whiteness Index: After 100 hrs Irradiation at 63 °C |
|---|---|---|---|---|---|
| **Controls** | | | | | |
| 1 None | 980 | 11.2 | 25.8 | 82.0 | 75.7 |
| 2 Tris(nonylphenyl)phosphite 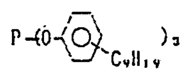 | 1020 | 10.5 | 22.3 | 89.7 | 81.2 |
| 3 4,4'-Butylidenebis(6-t-butyl-3-methyl-4-hydroxyphenol) tetra(tridecyl)phosphite 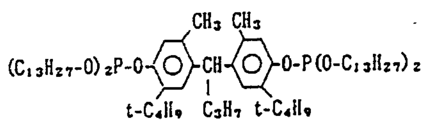 | 1270 | 8.3 | 18.4 | 90.9 | 88.3 |
| 4 Distearyl pentaerythritol diphosphite 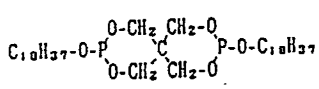 | 1130 | 9.5 | 20.2 | 89.9 | 84.3 |
| **Examples** | | | | | |
| 18 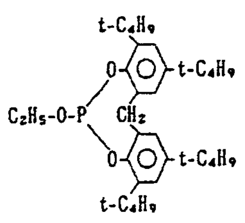 | 1410 | 7.4 | 11.5 | 93.8 | 92.4 |

Table IV (continued)

| | Phosphite | Hours to Failure | Yellowness Index: Original | Yellowness Index: After 1000 hrs Heating | Whiteness Index: Original | Whiteness Index: After 100 hrs Irradiation at 63°C |
|---|---|---|---|---|---|---|
| **Examples** | | | | | | |
| 19 | 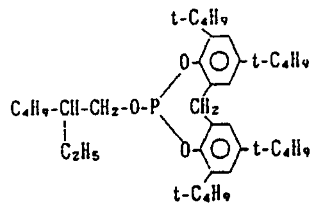 | 1440 | 7.1 | 10.2 | 94.3 | 93.1 |
| 20 | 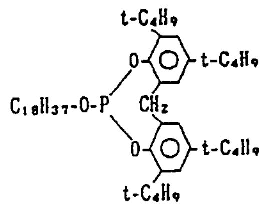 | 1380 | 7.8 | 15.3 | 96.5 | 96.0 |
| 21 | 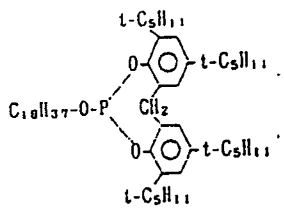 | 1390 | 7.6 | 13.3 | 95.3 | 94.2 |
| 22 | 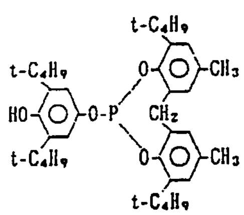 | 1370 | 7.3 | 13.4 | 95.7 | 93.4 |
| 23 | 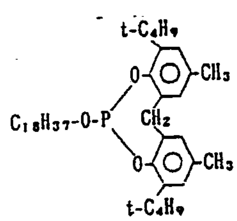 | 1420 | 7.5 | 12.3 | 93.9 | 91.1 |

The improvement in heat stability (hours to failure), resistance to change in color (yellowness index) and weatherability (whiteness index) when the phosphite of the invention is added, as compared to the three Fujii et al phosphites Controls 2, 3 and 4 from Fujii et al class (1) (column 5, lines 65 to 66) class (2) (column 6, lines 8 to 10) and class (4) (column 6, lines 28 to 29), is apparent from the data.

## Claims

1. A crystalline polyolefin resin composition having enhanced resistance to deterioration when exposed to elevated temperatures and/or ultraviolet light, comprising crystalline polyolefin resins containing residues of a Ziegler type complex catalyst supported on a halogen-containing magnesium compound and an organic phosphite having the formula:

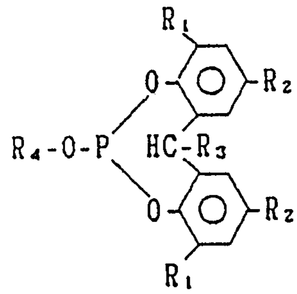

I

wherein $R_1$ is tertiary-butyl or tertiary-amyl, $R_2$ is alkyl having from one to about nine carbon atoms, $R_3$ is hydrogen or alkyl having from one to about four carbon atoms, and $R_4$ is selected from the group consisting of alkyl having from one to about thirty carbon atoms, and benzene groups having the formula:

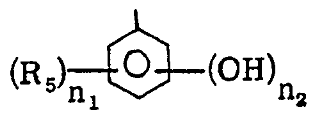

II

where $R_5$ is alkyl having from one to about four carbon atoms, and $n_1$ and $n_2$ are numbers from 0 to 2 in an amount sufficient to enhance resistance to such deterioration of the crystalline polyolefin resin.

2. A polyolefin composition according to claim 1 in which $R_1$ and $R_2$ of the phosphite are each tertiary butyl.

3. A polyolefin composition according to claim 1 in which $R_1$ and $R_2$ of the phosphite are each tertiary amyl.

4. A polyolefin composition according to claim 1 in which $R_1$ of the phosphite is tertiary butyl and $R_2$ is methyl.

5. A polyolefin composition according to one or more of the claims 1-4 in which $R_3$ of the phosphite is hydrogen or methyl.

6. A polyolefin composition according to one or more of the claims 1-5 in which $R_1$ of the phosphite is tertiary amyl.

7. A polyolefin composition according to one or more of the claims 1-6 in which $R_1$ of the phosphite os tertiary butyl.

8. A polyolefin composition according to one or more of the claims 1-7 in which $R_4$ of the phosphite is methyl, ethyl, isodecyl, dodecyl or octadecyl.

9. A polyolefin composition according to one or more of the claims 1-8 in which $R_5$ of the phosphite is tertiary butyl.

10. A polyolefin composition according to one or more of the claims 1-9 containing in addition a phenolic antioxidant.

European Patent Office

# EUROPEAN SEARCH REPORT

Application Number

EP 90 10 7887

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | US-A-4670492 (Y.NAKAHARA ET AL) *EXAMPLES 1-5, TABLES 1-2, EXAMPLES 6-7,CLAIMS 14,15* --- | 1, 2, 4, 5 | C08K5/527 C08L23/02 |
| A | EP-A-301875 (ADEKA ARGUS CHEMICAL CO.,LTD.) *WHOLE DOCUMENT* ----- | 1-10 | |

TECHNICAL FIELDS SEARCHED (Int. Cl.5 )

C08K
C08L

The present search report has been drawn up for all claims

| Place of search | Date of completion of the search | Examiner |
|---|---|---|
| THE HAGUE | 03 AUGUST 1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1